(19) Europäisches Patentamt
European Patent Office
Office européen des brevets

(11) **EP 4 144 010 B1**

(12) **EUROPEAN PATENT SPECIFICATION**

(45) Date of publication and mention
of the grant of the patent:
**30.07.2025 Bulletin 2025/31**

(21) Application number: **21726491.0**

(22) Date of filing: **27.04.2021**

(51) International Patent Classification (IPC):
*H04L 1/08* (2006.01)    *H04L 1/16* (2023.01)
*H04L 1/18* (2023.01)    *H04W 76/15* (2018.01)

(52) Cooperative Patent Classification (CPC):
**H04L 1/08; H04L 1/1685;** H04L 1/188

(86) International application number:
**PCT/US2021/029450**

(87) International publication number:
**WO 2021/134106 (01.07.2021 Gazette 2021/26)**

(54) **METHODS AND APPARATUS FOR EFFICIENT PACKET TRANSMISSION**

VERFAHREN UND VORRICHTUNG ZUR EFFIZIENTEN PAKETÜBERTRAGUNG

PROCÉDÉ ET APPAREIL POUR LA TRANSMISSION DE PAQUETS EFFICACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2020 US 202063027711 P**

(43) Date of publication of application:
**08.03.2023 Bulletin 2023/10**

(73) Proprietor: **Huawei Technologies Co., Ltd.
Longgang District,
Shenzhen,
Guangdong 518129 (CN)**

(72) Inventor: **YANG, Yunsong
San Diego, CA 92130 (US)**

(74) Representative: **Goddar, Heinz J.
Boehmert & Boehmert
Anwaltspartnerschaft mbB
Pettenkoferstrasse 22
80336 München (DE)**

(56) References cited:
WO-A1-2018/203697    CN-A- 109 428 694
US-A1- 2018 310 202

**Description**

This application claims the benefit of U.S. Provisional Application No. 63/027711, filed on May 20, 2020, entitled "System and Method for Providing Efficient Packet Duplication".

TECHNICAL FIELD

The present disclosure relates generally to methods and apparatus for wireless communications, and, in particular embodiments, to methods and apparatus for efficient packet transmission.

BACKGROUND

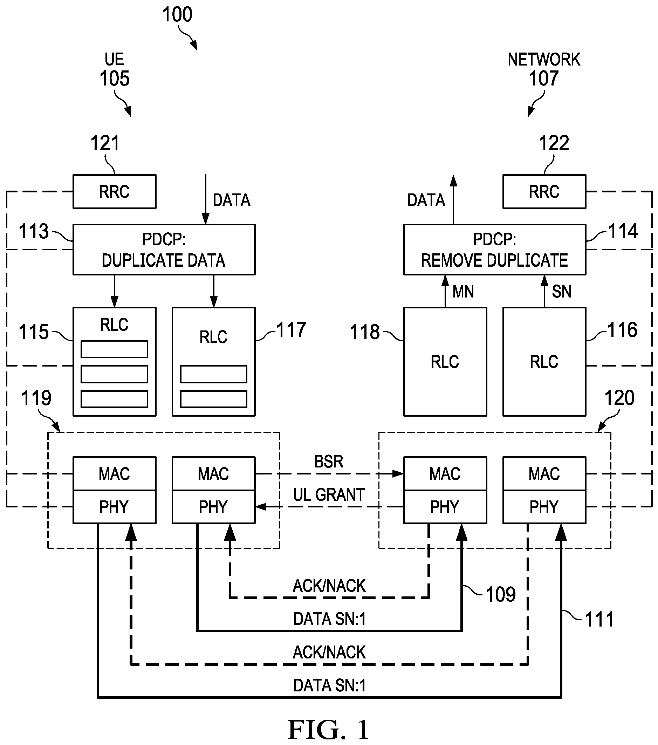

The Third Generation Partnership Project (3GPP) has introduced a packet duplication scheme at the Packet Data Convergence Protocol (PDCP) layer (hence the scheme referred to as PDCP duplication) of long term evolution (LTE) and 5G new radio (NR) standards, respectively, to provide a simple solution for improving reliability and reducing latency in wireless networks. Figure 1 illustrates diagram 100 of an example data transmission from a user equipment (UE) 105 to a network 107 via a radio bearer (RB) that is configured with PDCP duplication. As shown in Figure 1, two communication paths 109 and 111, which are also referred to as legs or radio links, exist between UE 105 and network 107. To enable data transmission with PDCP duplication over communication paths 109 and 111, one PDCP entity 113, two (one primary and one secondary) radio link control (RLC) entities 115 and 117, and associated media access control (MAC) and physical (PHY) entities 119 located below RLC entities 115 and 117 are configured on UE 105, and one PDCP entity 114, two (one primary and one secondary) RLC entities 116 and 118, and associated media access control (MAC) and physical (PHY) entities 120 located below RLC entities 116 and 118 are configured on network 107 for the RB. The configuration of PDCP entity 114, RLC entities 116 and 118, and MAC and PHY entities 120 is performed and controlled by a radio resource control (RRC) entity 122 of network 107. On UE 105, the configuration of PDCP entity 113, RLC entities 115 and 117, and MAC and PHY entities 119 is performed by an RRC entity 121 located above PDCP entity 113 of UE 105 but controlled by network 107 through over-the-air RRC signaling between RRC entities 121 and 122. The arrows in Figure 1 indicate that data is being transmitted from UE 105 and network 107 in this example.

Network 107 may also have a need to transmit data to UE 105 via this RB with PDCP duplication in order to meet the reliability and latency requirements in the reverse direction. If RLC entities 115-118 in Figure 1 are configured as the acknowledged mode (AM) RLC entities, RLC entities 115-118 can also be used for data transmission with PDCP duplication from network 107 to UE 105. This is because an AM RLC entity comprises of a transmitting side and a receiving side, and therefore supports bi-directional communications. If RLC entities 115-118 in Figure 1 are configured as the unacknowledged mode (UM) RLC entities, another pair of UM RLC entities (not shown in Figure 1) need to be configured on each of UE 105 and network 107 for data transmission in the reverse direction, so that on each of UE 105 and network 107, one pair of transmitting UM RLC entities are used for transmitting data with PDCP duplication and one pair of receiving UM RLC entities are used for receiving data with PDCP duplication. This is because a UM RLC entity can be either a transmitting UM RLC entity (which is only capable of transmitting data) or a receiving UM RLC entity (which is only capable of receiving data), but not both.

The various functional entities illustrated on UE 105 in Figure 1 are normally located within a single UE device. Meanwhile, the various functional entities on network 107 side in Figure 1 may be co-located within a single network node, such as an enhanced Node B (eNB) or a next generation Node B (gNB), for example, when PDCP duplication is provided using carrier aggregation (CA). Alternatively, when PDCP duplication is provided using dual connectivity (DC), the PDCP entity (such as PDCP entity 114) is in a hosting eNB or gNB referred to as the master node (MN), while the two underlying RLC entities (such as RLC entities 116 and 118) and the associated MAC and PHY entities (such as MAC and PHY entities 120, which, for example, would consist of two pairs of MAC and PHY entities) are respectively located at the MN and a secondary eNB or gNB referred to as the secondary node. Furthermore, a logical gNB may be partitioned into a centralized unit (CU) plus one or more differently located distributed units (DUs), with the PDCP entity (such as PDCP entity 114) being located in the gNB-CU and the two underlying RLC entities (such as RLC entities 116 and 118) and the associated MAC and PHY entities (such as MAC and PHY entities 120) being located in one or more gNB-DUs.

As shown in Figure 1, on UE 105 side, a data in the form of a PDCP service data unit (SDU) is obtained from a higher layer entity above PDCP entity 113 and processed by PDCP entity 113 to produce a PDCP protocol data unit (PDU). Examples of the higher layer entity above the PDCP entity include RRC entity 121 (as shown in Figure 1), when the RB is a signaling RB (SRB), and a service data adaptation protocol (SDAP) entity for 5G NR or an Internet protocol (IP) entity for LTE (neither being shown in Figure 1), when the RB is a data RB (DRB). Then, the PDCP PDU is duplicated by PDCP entity 113 and a copy of the PDCP PDU is delivered to each of RLC entities 115 and 117. Each of RLC entities 115 and 117 includes the PDCP PDU in one RLC PDU, or if the PDCP PDU is oversized, includes segments of the PDCP PDU in more than one RLC PDUs, and then delivers the RLC PDU(s) to MAC and PHY entities 119 for transmissions over associated radio links 109 and 111, respectively. Although two radio links are shown in Figure 1, it is possible to configure PDCP duplication with more than two radio links.

On network 107 side, when a PDCP PDU is successfully received over both radio links 109 and 111, PDCP entity 114 of network 107 detects and discards a duplicated copy so that the PDCP PDU is delivered to the higher layer entity on network 107 side only once. When a PDCP PDU is successfully received over one radio link but not over the other, PDCP entity 114 of network 107 delivers the received PDCP PDU to the associated higher layer entity. Therefore, the impact of losing the PDCP PDU over the other radio link is mitigated. Only when the transmissions of the PDCP PDU over both radio links are lost, does the PDCP entity of the network experience the loss of the PDCP PDU. Hence, PDCP duplication improves reliability through redundancy and path diversity. The path diversity can be frequency diversity when the different radio links are provided through different frequency carriers (i.e., using CA), or spatial diversity when the different radio links are provided through differently located transmitting nodes (i.e., using DC), or a combination thereof. Robustness is not only improved for data in the user plane (i.e., when the RB is a DRB) but also for signaling messages in the control plane (i.e., when the RB is an SRB). PDCP duplication also reduces jitters by minimizing the variance in latency.

US 2018/310202 A1 discloses: Techniques provided herein select an operating mode from a plurality of operating modes. Various implementations establish a radio bearer with at least one network entity over a network using a first Radio Link Control (RLC) protocol entity and a second RLC protocol entity. Various implementations determine whether packet duplication is enabled for the radio bearer by processing Packet Data Convergence Protocol (PDCP) configuration settings. In response to determining that packet duplication is enabled, various implementations duplicate uplink data packets over the network by submitting the uplink data packets to both the first RLC protocol entity and the second RLC entity. In response to determining that packet duplication is disabled and split bearer is enabled, various implementations select one of the first RLC protocol entity and the second RLC protocol entity for uplink data packet transmission.

CN 109428694 A discloses a media access control layer multiplexing method and devices. Information indication for PDCP (Packet Data Convergence Protocol) data duplication is realized between a network and a terminal, PDCP PDU and PDCP data duplication is guaranteed to be not multiplexed in one transmission block, and PDCP duplication reliability gain is further guaranteed.

SUMMARY

According to a first aspect, a method implemented by a device is provided according to appended claim 1.

According to a second aspect, an apparatus is provided according to appended claim 11. The apparatus is configured to perform the method according to the first aspect.

According to a third aspect, a computer program product is provided according to appended claim 12. The computer program product comprises an instruction, wherein when the instruction is executed by one or more processor, cause the one or more processor to perform the method according to the first aspect.

The invention is defined by the appended independent claims. Further advantageous embodiments of the invention are set out in the appended dependent claims.

An advantage of a preferred embodiment is that radio resource efficiency is improved by providing more time to identify, and based thereon, to cancel the unnecessary duplicated transmissions, while the reliability and latency performance during data transmission are improved by maintaining the necessary duplicated transmissions.

Yet another advantage of a preferred embodiment is that the enhanced packet duplication and transmission cancellation techniques not only work for AM DRBs, but also for SRBs and UM DRBs.

Practice of the foregoing embodiments facilitates ultra-reliable and low-latency communication (URLLC).

BRIEF DESCRIPTION OF THE DRAWINGS

For a more complete understanding of the present disclosure, and the advantages thereof, reference is now made to the following descriptions taken in conjunction with the accompanying drawings, in which:

Figure 1 illustrates an example data transmission from a user equipment (UE) to a network via a radio bearer (RB) that is configured with Packet Data Convergence Protocol (PDCP) duplication;

Figure 2A illustrates a diagram of an example of an enhanced transmitting PDCP entity, with a corresponding receiving PDCP entity, wherein transmitting PDCP entity duplicates a stream of PDCP PDUs for two radio links according to example embodiments presented herein;

Figure 2B illustrates a diagram of another example of an enhanced transmitting PDCP entity, with a corresponding receiving PDCP entity, wherein transmitting PDCP entity duplicates a stream of PDCP PDUs for two radio links according to example embodiments presented herein;

Figure 3A illustrates a diagram of a first example of two enhanced AM RLC entities used in PDCP duplication according to example embodiments presented herein;

Figure 3B illustrates a diagram of a second example of two enhanced transmitting UM RLC entities used in PDCP duplication, with corresponding receiving UM RLC entities according to example embodiments presented herein;

Figure 4A illustrates a diagram of how data packets are written into and read out from a FIFO buffer;

Figure 4B illustrates a diagram of how data packets are written into and read out from a LIFO buffer;

Figure 5 illustrates a diagram of an example of a stream of packets in the form of PDCP PDUs being transmitted in a FIFO manner for one of the two radio links and in a LIFO manner for the other of the two radio links, in accordance with the first example PDCP duplication scheme according to example embodiments presented herein;

Figure 6 illustrates a diagram of the transmission of an example stream of packets (PDCP PDUs), wherein a re-sequence block is added for each of two radio links that are configured for PDCP duplication, each re-sequence block comprising the dual (prioritized and unprioritized) buffers using another enhanced PDCP duplication scheme according to example embodiments presented herein;

Figures 7A and 7B illustrate a diagram of the transmission of an example stream of packets (PDCP PDUs) being transmitted over three radio links using yet another enhanced PDCP duplication scheme according to example embodiments presented herein;

Figure 8 illustrates a diagram of the format and content of the PDCP Status Report;

Figure 9 illustrates a flow diagram of example operations occurring in a device, as the device transmits a stream of packets with packet duplication over a plurality of radio links, according to example embodiments presented herein;

Figure 10 illustrates a flow diagram of example operations occurring in a PDCP entity of a device, as the PDCP entity submits a stream of packets to a plurality of RLC entities for transmission over a plurality of radio links, according to example embodiments presented herein;

Figure 11 illustrates a flow diagram of example operations occurring in an RLC entity of a device, as the RLC entity submits a stream of packets for transmission over one of a plurality of radio links, according to example embodiments presented herein;

Figure 12 illustrates a flow diagram of example operations occurring in a device, as the device receives a stream of packets with packet duplication over a plurality of radio links, according to example embodiments presented herein;

Figure 13 illustrates an example communication system according to example embodiments presented herein;

Figures 14A and 14B illustrate example devices that may implement the methods and teachings according to this disclosure; and

Figure 15 is a block diagram of a computing system that may be used for implementing the devices and methods disclosed herein.

## DETAILED DESCRIPTION OF ILLUSTRATIVE EMBODIMENTS

The structure and use of disclosed embodiments are discussed in detail below. It should be appreciated, however, that the present disclosure provides many applicable concepts that can be embodied in a wide variety of specific contexts. The specific embodiments discussed are merely illustrative of specific structure and use of embodiments, and do not limit the scope of the disclosure.

The benefits of using Packet Data Convergence Protocol (PDCP) duplication, as specified in 3GPP Release 15 standards, come with a price, i.e., the system-wise radio efficiency is reduced, because additional radio resources, in frequency and/or spatial domains, are needed for transmitting the duplicated packets. In certain scenarios, the benefits of using PDCP duplication may be limited, hence may be unjustified due to the lower radio efficiency. For example, when the channel conditions over one or both radio links are good, the additional radio resources used in transmitting the duplicated packets are mostly wasted. For another example, if the latency over the Xn interface between the master node (MN) and the secondary node is high with the MN being the data anchor towards the network, then, latency reduction achieved by using the secondary node for the duplicated transmissions may be marginal. Hence, a dynamic control mechanism is introduced in Third Generation Partnership Project (3GPP) Release 15 standards, wherein PDCP duplication, once configured between a data-transmitting device and data-receiving device (e.g., user equipment (UE) 105 and network 107 in Figure 1), can be dynamically activated when and where it is beneficial and de-activated when and where the use of it is unjustified. However, the dynamic control mechanism incurs additional signaling overheads, e.g., the media access control (MAC) control elements (CEs) that carries the activation or de-activation command, and the measurement reports of radio conditions or radio link performance, based which decisions to activate or de-activate PDCP duplication may be made.

Besides the dynamic activation/de-activation of PDCP duplication, 3GPP technical specification (TS) 38.323 also specifies that when a transmitting radio link control (RLC) entity (such as RLC entity 115 in Figure 1) acknowledges the transmission of a PDCP protocol data unit (PDU) being successful, the transmitting PDCP entity (such as PDCP entity 113) shall indicate to the other transmitting RLC entity (such as RLC entity 117) to cancel any pending transmissions of the same PDCP PDU in order to avoid unnecessary duplicated transmission. For example, the transmitting RLC entity may determine the transmission of a PDCP PDU being successful based on an RLC Status PDU feedback received from the counterpart RLC entity of the data-receiving device. The RLC Status PDU may be received from the counterpart RLC entity in response to a timer expiration, a data volume exceeding a threshold, or an explicit request sent by the transmitting RLC entity. In any case, RLC Status PDUs aren't meant to be transmitted frequently due to the signaling overhead involved.

On the other hand, schedulers associated with the two radio links, respectively, are racing against each other in scheduling the transmissions of the same PDCP PDUs over the respective radio link at about the same time. Therefore, despite the transmission cancellation scheme specified in the standard, in practice, transmissions of many duplicated packets may not be cancelled in time to avoid the unnecessary transmissions over the air. The transmission of a duplicated PDCP PDU, where the transmission occurs after the PDCP PDU has been successfully transmitted (i.e., has been received by the counterpart) at least once over one of the multiple radio links, is herein and hereafter referred to as an unnecessary duplicated transmission. The transmission of a duplicated PDCP PDU over a radio link won't result in a duplicate being received when the transmissions of the same PDCP PDU over the other radio link(s) have exhausted the maximal number of automatic repeat request (ARQ) retransmissions (for acknowledged mode (AM) RLC) or hybrid ARQ (HARQ) retransmissions (for unacknowledged mode (UM) RLC) and still failed. Therefore, this later type of duplicated transmissions is truly needed, and is herein and hereafter referred to as the necessary duplicated transmission. However, the RLC Status PDU, as specified in 3GPP TS 36.322 and TS 38.322, is only available for AM RLC. Hence, the transmission cancellation scheme based on the RLC feedback (e.g., carried in an RLC Status PDU) only works for signaling RBs (SRBs) and data RBs (DRBs) that use AM RLC (which DRBs are referred to as AM DRBs) but doesn't work for DRBs that use UM RLC (which DRBs are referred to as UM DRBs). UM DRBs are often used for real-time multimedia services, such as real-time video streaming, augmented reality (AR), virtual reality (VR), and interactive gaming. When PDCP duplication is used in delivering these services over multiple radio links of a UM DRB, unnecessary duplicated transmissions are unavoidable due to a lack of the RLC feedback. Hence, the radio efficiency is low in these situations.

Therefore, there is a need for methods and apparatus to overcome the above drawbacks in order to further improve the radio efficiency when PDCP duplication is used to improve reliability and to lower latency and jitter. Example embodiments enable a data-transmitting device, which utilizes PDCP duplication for transmitting data, to cancel as many unnecessary duplicated transmissions as possible. Example embodiments also enable the data-transmitting device to determine, as early as possible, which pending duplicated transmissions are necessary and which ones are unnecessary, in order to achieve the first goal.

According to example embodiments, methods and apparatus are provided for a device to transmit data using packet duplication with high radio efficiency. The device obtains a stream of packets to be transmitted; stores the stream of packets in each buffer of a plurality of buffers; transmits packets stored in the plurality of buffers over a plurality of radio links, wherein the packets stored in the each buffer of the plurality of buffers are transmitted over a unique radio link of the plurality of radio links in an order unique for that radio link; and while transmitting the packets stored in the plurality of buffers over the plurality of radio links, receives information of one or more packets of the stream of packets being successfully received by a peer device. The device discards the one or more packets from the each buffer of the plurality of buffers (so as to prevent them from being transmitted again) based on the information of the one or more packets of the stream of packets being successfully received by the peer device. In other words, by transmitting the same stream of packets in different orders over different radio links, the radio resources on the different radio links can be used for initially transmitting different packets of the stream of packets while different remaining packets of the stream of packets can be queued in the respective buffers for pending transmissions over the different radio links, in case that any of the different packets initially transmitted fails. This helps to avoid the race condition between the different radio links.

When the different packets are successfully transmitted over the different radio links, the respective duplicated copies of the successfully transmitted packets, which are still being queued in the buffers of associated radio links that have not had an opportunity to transmit the duplicates of the successfully transmitted packets, are therefore discarded. Hence, no further transmission of these packets is attempted by any other radio links. When the transmission of a packet over a radio link has failed (e.g., having exhausted the maximal number of ARQ (for AM RLC) or HARQ (for UM RLC) re-transmissions and still failed), the packet will be discarded by the transmitting RLC entity associated with that radio link (e.g., removed from the transmission buffer of that transmitting RLC entity), but a duplicated copy of the same packet is still being queued in the buffer(s) of the transmitting RLC entity(s) associated with the other radio link(s) for pending transmissions.

While the conventional PDCP duplication method has the issue that the race condition between the different radio links undermines the effectiveness of the transmission cancellation scheme, the enhancement described herein helps to avoid the race condition and provides more time between the first moment that a packet being successfully transmitted over one radio link is determined (e.g., by receiving a feedback from the peer device) and the moment(s) that the other radio link(s) are scheduled to transmit the same packet. And as a result, the chance to cancel the pending transmission(s) of the duplicated copy(s) of the same packet over the other radio link(s) in time is increased. In short, the enhancement described herein yields a higher chance to avoid the unnecessary duplicated transmissions, achieving the first goal as described above.

In an embodiment, in order to enable the transmissions of the packets stored in the plurality of buffers over the plurality of radio links with orderings that are unique for the respective radio links, a logical function block (referred to as a re-sequence block) is added to the data-transmitting device associated with one or more of the plurality of radio links. The re-sequence block causes the order, in which packets of the stream of packets are submitted to the lower layer entities (such as MAC and PHY entities 119 in Figure 1) for transmission, be altered comparing with a natural order, the natural order being the order that these packets are obtained from a higher layer (such as RRC, SDAP, or IP) entity or the order of the PDCP sequence numbers (SNs) that these packets are respectively assigned with by the transmitting PDCP entity (such as PDCP entity 113), for example, wherein the PDCP SN assignment occurs before the re-sequence block.

In a first embodiment, no re-sequence block is added to a first radio link of the plurality of radio links while a re-sequence block is added to each of the remaining radio links, with each of the re-sequence blocks being configured with a unique alteration pattern (or algorithm), so that packets of the same stream of packets are to be transmitted in the natural order over the first radio link while packets of the same stream of packets are to be transmitted in a uniquely altered order over the remaining radio link(s). In a second embodiment, a re-sequence block is added to each of the plurality of radio links, with each of the re-sequence blocks being configured with a unique alteration pattern (or algorithm). In a special case of the second embodiment, the re-sequence block added to the first radio link is a null block, meaning that no alteration is made to the transmission order (comparing with the natural order) of the stream of packets. In this situation, the second embodiment effectively becomes the first embodiment. Therefore, the first embodiment is a special case of the second embodiment, wherein one of the plurality of re-sequence blocks of the second embodiment being a null block.

In accordance with a first example architecture embodiment, the conventional transmitting PDCP entity can be enhanced by adding one or more re-sequence block(s) at the bottom of the transmitting PDCP entity (such as PDCP entity 113 in Figure 1), after the PDCP duplication function block. Each of the one or more re-sequence blocks may include a buffer (memory) for performing the re-sequence function and/or storing the stream of packets, before delivering the stream of packets in the respective order (the natural order or a uniquely altered order) to the associated lower layers for transmission.

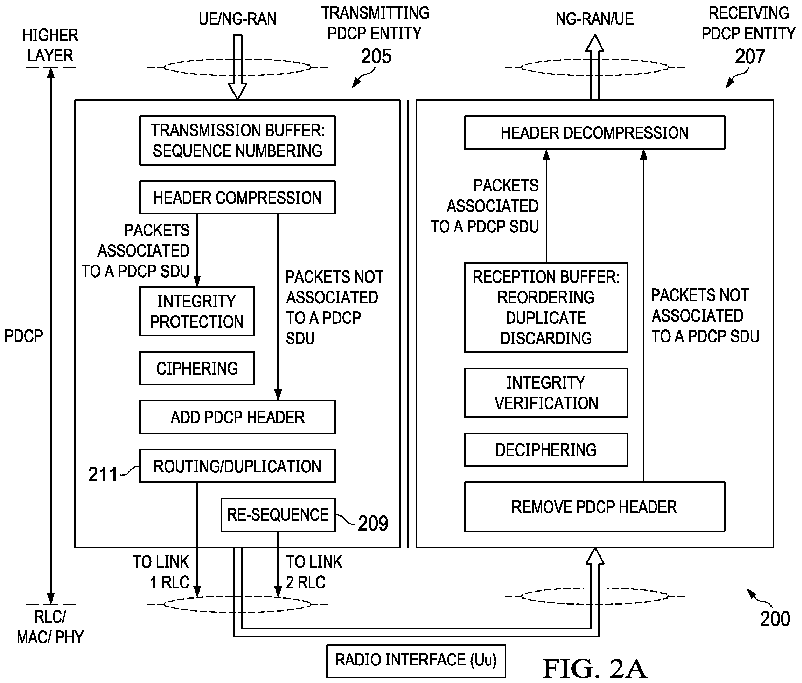

Figure 2A illustrates a diagram 200 of an example of an enhanced transmitting PDCP entity 205, with a corresponding receiving PDCP entity 207, wherein transmitting PDCP entity 205 duplicates a stream of PDCP PDUs for two radio links (referred to as Link 1 and Link 2 in Figure 2A). Enhanced transmitting PDCP entity 205 differs from a conventional transmitting PDCP entity in that a re-sequence block 209 is added to transmitting PDCP entity 205, after a PDCP duplication and routing block 211, on the path towards an underlying RLC entity associated with Link 2, while no re-sequence block is added on the path toward another underlying RLC entity associated with Link 1.

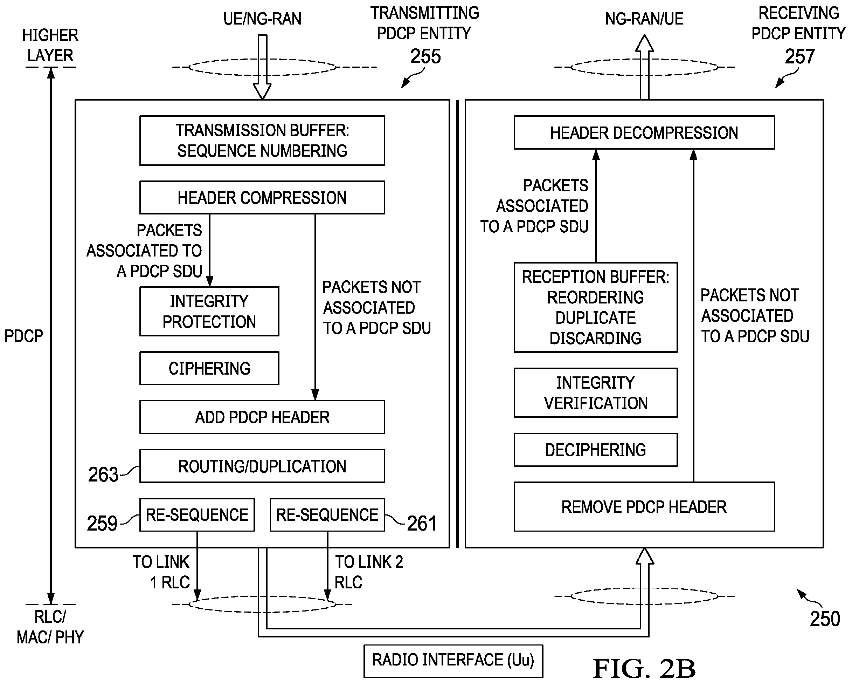

Figure 2B illustrates a diagram 250 of another example of an enhanced transmitting PDCP entity 255, with a corresponding receiving PDCP entity 257, wherein transmitting PDCP entity 255 duplicates a stream of PDCP PDUs for two radio links (referred to as Link 1 and Link 2 in Figure 2B). Enhanced transmitting PDCP entity 255 differs from the conventional transmitting PDCP entity in that two re-sequence blocks 259 and 261 are added to transmitting PDCP entity 255, after the PDCP duplication and routing block 263, on the paths towards both underlying RLC entities, with each of re-sequence blocks 259 and 261 being configured with a unique alteration pattern (or algorithm).

The enhanced transmitting PDCP entities illustrated in Figures 2A and 2B may be implemented in a UE or a network node, such as an eNB, a gNB, or a gNB-CU. In both examples, the two RLC entities located below the transmitting PDCP entity can both be AM RLC entities or UM RLC entities. As discussed before, the example illustrated in Figure 2A is effectively a special case of the example illustrated in Figure 2B, with the re-sequence block added for Link 1 in Figure 2B being a null block. Furthermore, although Figures 2A and 2B illustrate PDCP entities that duplicate streams of PDCP PDUs over two radio links, the example embodiments are capable of duplicating the streams over a plurality of radio links. Therefore, the discussion of two radio links should not be construed as being limiting to the scope of the example embodiments.

In accordance with a second example architecture embodiment, a re-sequence block may be added to one or more transmitting RLC entities (such as RLC entities 115 and 117 in Figure 1), either added as a separate function block before the RLC header generation and transmission buffer block, or combined with the RLC header generation and transmission buffer block to form a modified RLC header generation and transmission buffer block that performs the re-sequence function in addition to the storing and RLC header generation functions.

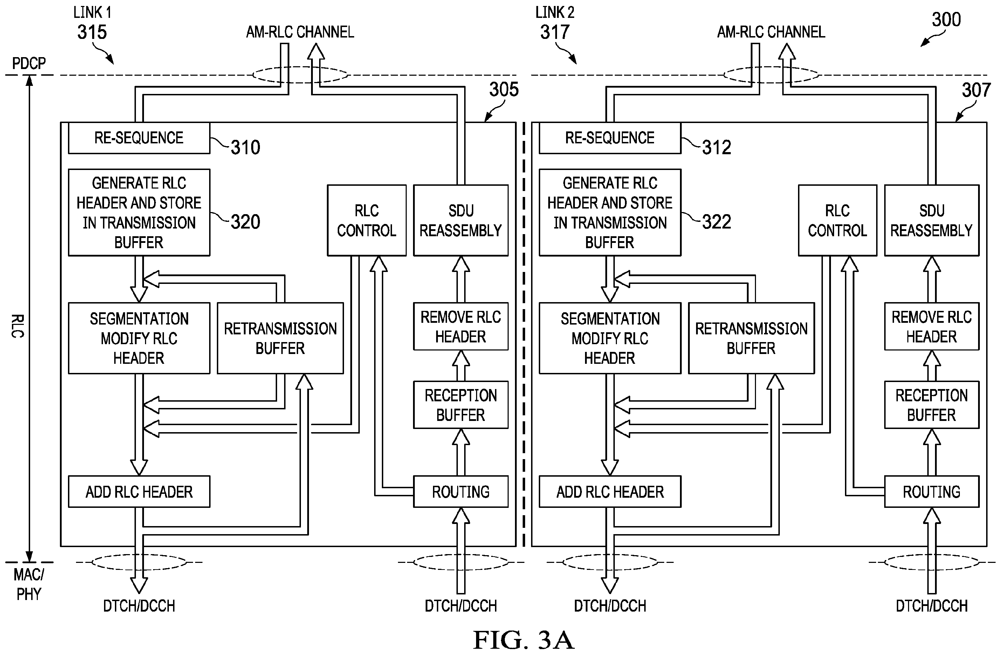

Figure 3A illustrates a diagram 300 of a first example of two enhanced AM RLC entities 305 and 307 used in PDCP duplication. Enhanced AM RLC entities 305 and 307 differ from a conventional AM RLC entity in that a re-sequence block, such as re-sequence blocks 310 and 312, is added to the transmitting side of AM RLC entities 305 and 307, respectively, AM RLC entities 305 and 307 being associated with two radio links (shown as Link 1 315 and Link 2 317 in Figure 3A), respectively, with each of re-sequence blocks 310 and 312 being configured with a unique alteration pattern (or algorithm).

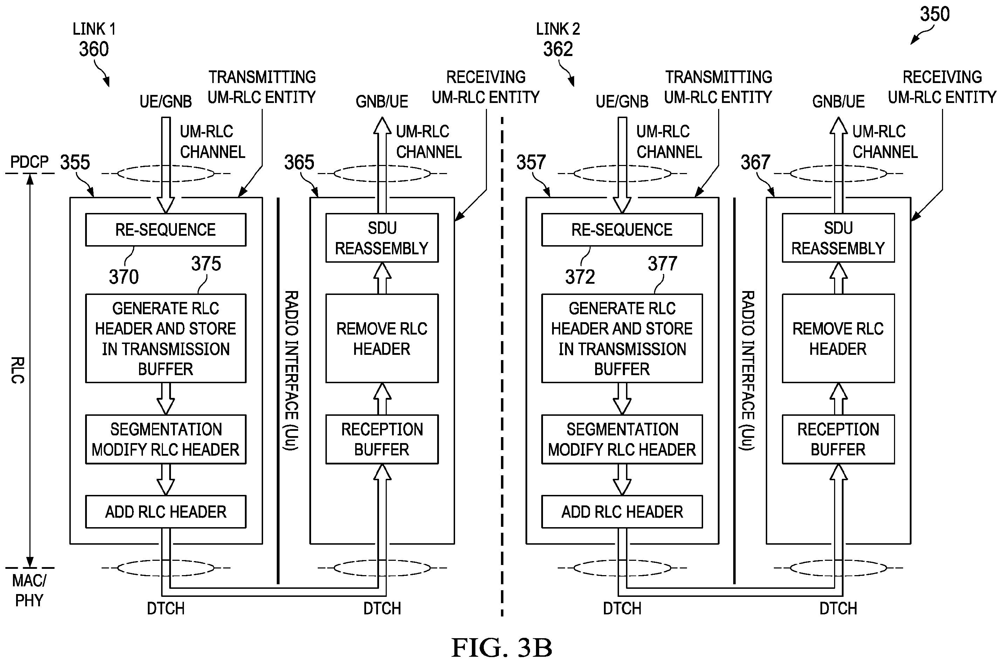

Figure 3B illustrates a diagram 350 of a second example of two enhanced transmitting UM RLC entities 355 and 357 (on the left sides of Link 1 360 and Link 2 362, respectively, in Figure 3B) used in PDCP duplication, with corresponding receiving UM RLC entities 365 and 367 illustrated on the right sides of the respective radio links. Enhanced transmitting UM RLC entities 355 and 357 differ from a conventional transmitting UM RLC entity in that a re-sequence block, such as re-sequence blocks 370 and 372, is added to transmitting UM RLC entities 355 and 357, respectively, transmitting UM RLC entities 355 and 357 being associated with Link 1 360 and Link 2 362, respectively, with each of re-sequence blocks 370 and 372 being configured with a unique alteration pattern (or algorithm).

Enhanced AM RLC entities 305 and 307 or enhanced transmitting UM RLC entities 355 and 357 may be implemented in a UE or one or more network nodes, such as eNBs, gNBs, or gNB-DUs. Re-sequence blocks 310, 312, 370, and 372 are shown in Figures 3A and 3B as being placed, as separate blocks, before RLC header generation and transmission buffer blocks 320, 322, 375, and 377 of the respective RLC entities. Alternatively, each re-sequence block may be combined with the respective RLC header generation and transmission buffer block to form a modified RLC header generation and transmission buffer block that performs the re-sequence function in addition to the storing and RLC header generation functions. As an example, re-sequence block 310 may be combined with RLC header generation and transmission buffer block 320. As discussed before, a re-sequence block added to one of the multiple radio links (such as Link 1 315 and 360 of Figures 3A and 3B) can be a null block. Hence, the use of the second embodiment as presented in the illustration and description of Figures 3A and 3B should not be interpreted as excluding the use of the first embodiment described previously.

In accordance with a first example PDCP duplication scheme, the re-sequence block added for one of two radio links that are configured for PDCP duplication, such as re-sequence blocks 259, 310, and 370 added for Link 1 in Figures 2B, 3A, and 3B, respectively, is a null block. Or, in another words, no re-sequence block is added for that radio link, as illustrated in Figure 2A. Meanwhile, the re-sequence block added for the other radio link (such as re-sequence blocks 209, 261, 312, and 372 added for Link 2 in Figures 2A, 2B, 3A, and 3B, respectively) is a last-in first-out (LIFO) buffer. It is noted that the conventional transmission buffer in an RLC entity (such as RLC header generation and transmission buffer blocks 320 and 375 in Figures 3A and 3B) works as a first-in first-out (FIFO) buffer.

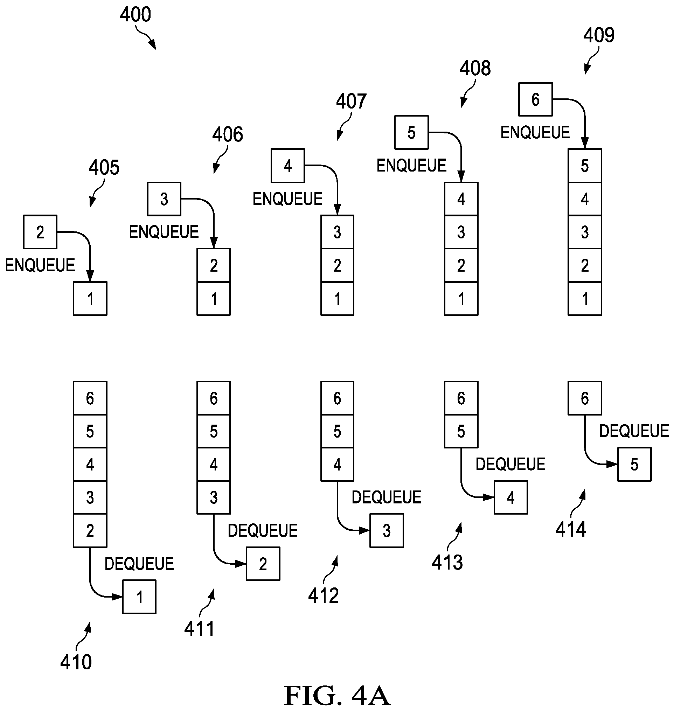

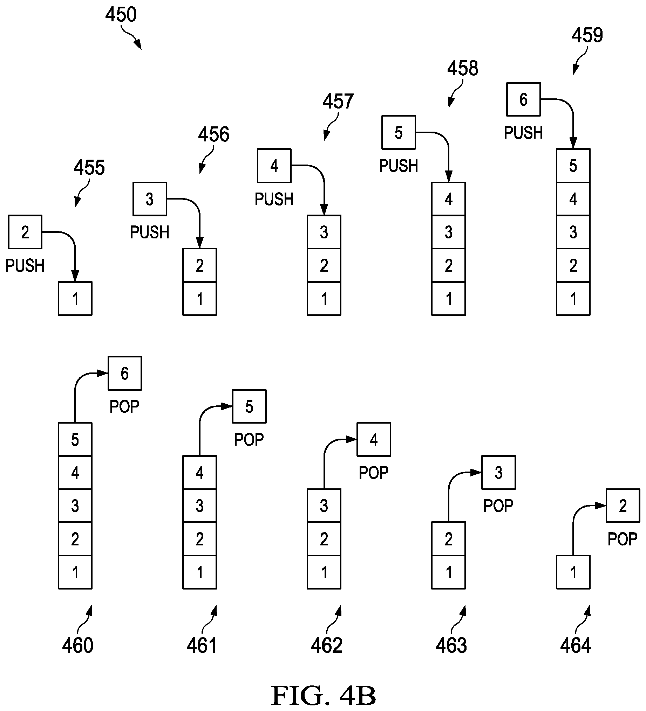

Figure 4A illustrates a diagram 400 of how data packets are written into and read out from a FIFO buffer. Steps 405-409 illustrate packets #1-#6 being written into a FIFO buffer, while steps 410-414 illustrates packets #1-#6 being read out from the FIFO buffer. As an example, packet #1 is the first packet written into the FIFO buffer (step 405), and packet #1 is the first packet read out of the FIFO buffer (step 410). Figure 4B illustrates a diagram 450 of how data packets are written into and read out from a LIFO buffer. Steps 455-459 illustrate packets #1-#6 being written into a LIFO buffer, while steps 460-464 illustrates packets #1-#6 being read out from the LIFO buffer. As an example, packet #6 is the last packet written into the LIFO buffer (step 459), and packet #6 is the first packet read out of the LIFO buffer (step 460).

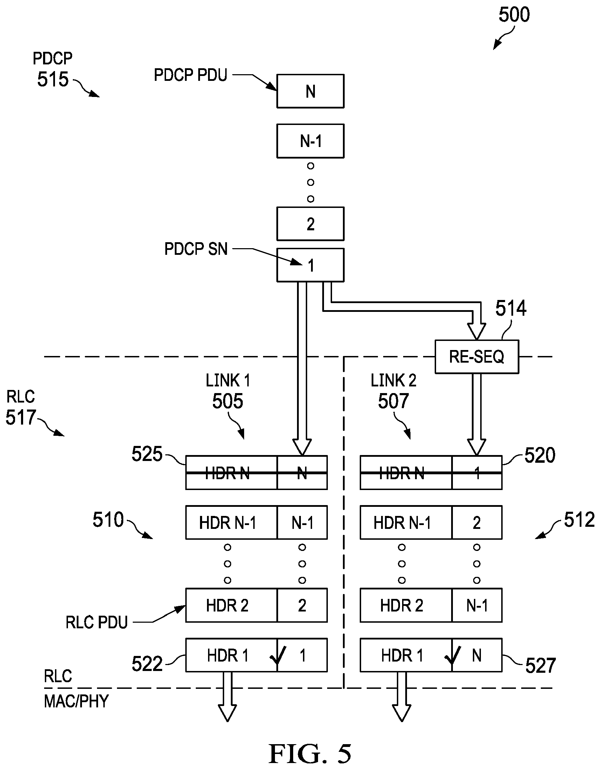

Figure 5 illustrates a diagram 500 of an example of a stream of packets in the form of PDCP PDUs being transmitted in a FIFO manner for one of the two radio links (e.g., Link 1 505 in Figure 5) and in a LIFO manner for the other of the two radio links (e.g., Link 2 507 in Figure 5), in accordance with the first example PDCP duplication scheme described above. A re-sequence block 514, which is a LIFO buffer as illustrated in Figure 4B, is added for Link 2 507, while no re-sequence block is added for Link 1 505. A conventional transmission buffer 510 in a RLC header generation and transmission buffer block of the RLC entity associated with Link 1 505 is a FIFO buffer, as illustrated in Figure 4A. Therefore, in the absence of a re-sequence block for Link 1 505, the stream of PDCP PDUs are submitted in a FIFO manner to the underlying MAC and PHY entities associated with Link 1 505 for transmission. Meanwhile, a conventional transmission buffer 512 in a RLC header generation and transmission buffer block of the RLC entity associated with Link 2 507 is also a FIFO buffer. However, with re-sequence 514 being added for Link 2 507, the same (duplicated) stream of PDCP PDUs are effectively submitted in a LIFO manner to the underlying MAC and PHY entities associated with Link 2 507 for transmission.

In Figure 5, re-sequence block 514 is shown as being added across a border line between PDCP layer 515 and RLC layer 517, to reflect the possible variations, wherein re-sequence block 514 may be located at PDCP entity 515, as illustrated in Figure 2A, or at the transmitting side of the AM RLC entity or the transmitting UM RLC entity associated with Link 2 507, such as illustrated in Figures 3A and 3B, respectively, with re-sequence blocks 310 and 370 added for Link 1 in Figures 3A and 3B, respectively, being a null block. In the latter two cases where re-sequence block 514 is located at the transmitting side of the AM RLC entity or transmitting UM RLC entity, re-sequence block 514 may be a separate buffer located before the RLC header generation and transmission buffer block, as illustrated in Figures 3A and 3B, with conventional transmission buffer 512 in the RLC header generation and transmission buffer block of the RLC entity associated with Link 2 507 being a FIFO buffer.

Alternatively, re-sequence block 514 may simply replace conventional transmission buffer 512 in the RLC header generation and transmission buffer block of the RLC entity associated with Link 2 507, with the RLC header being generated for each PDCP PDU after the PDCP PDU is read out from the LIFO buffer for delivery to the lower layer.

As shown in Figure 5, N PDCP PDUs (labeled from 1 to N, e.g., 1 to N being the respective PDCP SNs of the N PDCP PDUs) are generated by the transmitting PDCP entity from N PDCP SDUs obtained from the higher layer entity above the transmitting PDCP entity. Each PDCP PDU includes, in a PDCP header of the PDCP PDU (which headers are not shown in Figure 5), a unique PDCP SN assigned by the transmitting PDCP entity in an incremental manner. Additional processing, such as header compression, integrity protection, and ciphering, as shown in various function blocks in Figure 2A, may be performed on the PDCP SDUs when generating the PDCP PDUs. Then, the stream of the PDCP PDUs is duplicated for Link 1 505 and Link 2 507 by the duplication and routing block (as shown in Figure 2A) of the transmitting PDCP entity. The first duplicated stream of the N PDCP PDUs are directly submitted to a first underlying RLC entity associated with Link 1 505 and stored in conventional transmission buffer 510 (which is a FIFO buffer) in the RLC header generation and transmission buffer block of the first RLC entity. When transmission opportunity presents at the lower layer (i.e., MAC and PHY) entities associated with Link 1 505, the first duplicated stream of the N PDCP PDUs stored in conventional transmission buffer 510 are read out in the natural order, with each PDCP PDU being added with an RLC header (shown in Figure 5 as "Hdr" followed by a number) to generate an RLC PDU.

A PDCP PDU may generate more than one RLC PDUs if the PDCP PDU is oversized and therefore, needs to be segmented into multiple segments, with each of the more than one RLC PDUs carrying one of the multiple segments. In which case, the RLC headers added to each of the more than one RLC PDUs share a same RLC SN that is unique to the PDCP PDU, where the RLC SN assists the data-receiving device in reassembling the multiple segments back into the whole PDCP PDU. The effect of RLC segmentation isn't shown in Figure 5 for simplicity. Then, the generated RLC PDUs are submitted, in the order that they are generated, to the lower layers for transmissions over Link 1 505.

Meanwhile, the second duplicated stream of the N PDCP PDUs are submitted to re-sequence block 514 (which is a LIFO buffer) first, and are either stored in re-sequence block 514, if re-sequence block 514 has replaced conventional transmission buffer 512 in the RLC header generation and transmission buffer block of a second RLC entity associated with Link 2 507. Alternatively, the second duplicated stream of the N PDCP PDUs are read out from re-sequence block 514 (in the LIFO manner) and then stored in conventional transmission buffer 512 in the RLC header generation and transmission buffer block of the second RLC entity in the order that they are read out from re-sequence block 514, if re-sequence block 514 is a separate buffer located before the RLC header generation and transmission buffer block of the second RLC entity.

When a transmission opportunity presents at the lower layers associated with Link 2 507, the second duplicated stream of the N PDCP PDUs, which are either stored in re-sequence block 514, if re-sequence block 514 has replaced conventional transmission buffer 512 in the RLC header generation and transmission buffer block of the second RLC entity, or stored in conventional transmission buffer 512, if re-sequence block 514 is a separate buffer located before the RLC header generation and transmission buffer block of the second RLC entity, are read out in the altered order (comparing with the natural sequential order), due to the use of re-sequence block 514. Each PDCP PDU read out is added with an RLC header to generate an RLC PDU. Then, the generated RLC PDUs are submitted, in the order that they are generated, to the lower layers for transmissions over Link 2 507.

Therefore, as shown in Figure 5, the stream of N PDCP PDUs is to be transmitted over Link 1 505 in sequential order from 1 to N, while they are to be transmitted over Link 2 507 in reverse order from N to 1. Figure 5 further shows that, as PDCP PDUs #1 522 and #N 527 are successfully transmitted (shown as being checked by a check mark) over Link 1 505 and Link 2 507, respectively, the duplicated copies of them are discarded (e.g., duplicate PDCP PDU #1 520 is discarded due to successful transmission of PDCP PDU #1 522, and duplicate PDCP PDU #N 525 is discarded due to successful transmission of PDCP PDU #N 527) from the back of the transmission buffer of the respective RLC entity associated the other radio link, the transmission buffer being either re-sequence block 514 (which is a LIFO buffer), if re-sequence block 514 is combined with and thereby replaces conventional transmission buffer 512 in the RLC header generation and transmission buffer block of the second RLC entity, or conventional transmission buffer 512, if re-sequence block 514 is a separate buffer located before the RLC header generation and transmission buffer block of the second RLC entity. Figure 5 shows that there is no race condition between Link 1 505 and Link 2 507, and there is ample time to cancel the unnecessary duplicated transmissions.

In accordance with a second example PDCP duplication scheme, a re-sequence block is added for each of multiple radio links that are configured for PDCP duplication, e.g., a re-sequence block is added for each of the two radio links at the transmitting PDCP entity, as illustrated in Figures 2B, or at the transmitting side of each AM RLC entity, as illustrated in Figure 3A, or at each transmitting UM RLC entity, as illustrated in Figure 3B, wherein each of the re-sequence blocks comprises of two (FIFO) buffers, with a first FIFO buffer being referred to as the prioritized buffer and a second FIFO buffer being referred to as the unprioritized buffer. Furthermore, the stream of PDCP PDUs may be logically partitioned into M mutually exclusive sets of PDCP PDUs, where M is the number of radio links being used for PDCP duplication. A first re-sequence block associated with a first radio link of the multiple radio links (such as Link 1 in Figures 2B, 3A, and 3B) stores a first set of the M sets of PDCP PDUs into its prioritized buffer and the remaining sets of PDCP PDUs into its unprioritized buffer. A second re-sequence block associated with a second radio link of the multiple radio links (such as Link 2 in Figures 2B, 3A, and 3B) stores a second set of the M sets of PDCP PDUs into its prioritized buffer and the remaining sets of PDCP PDUs into its unprioritized buffer, and so on and so forth. Then, for each radio link, when a transmission opportunity presents at the lower layers associated with the radio link, as a general guideline, the re-sequence block associated with that radio link may attempt to empty its prioritized buffer first before attempting to empty its unprioritized buffer.

As an example, if the re-sequence blocks (each comprising the dual buffers) are added at the bottom of the transmitting PDCP entity, as illustrated in Figures 2B, then when a first underlying RLC entity requests for more PDCP PDUs to be delivered, a first re-sequence block associated with the first underlying RLC entity may first attempt to deliver the PDCP PDUs stored in its prioritized buffer (in sequence) to the first underlying RLC entity if its prioritized buffer isn't empty, and the first re-sequence block may then attempt to deliver the PDCP PDUs stored in its unprioritized buffer (in sequence) to the first underlying RLC entity when its prioritized buffer is empty. Similarly, the other re-sequence blocks may also first attempt to deliver the PDCP PDUs stored in their respective prioritized buffers before attempting to deliver the PDCP PDUs stored in their respective unprioritized buffers.

As another example, if the re-sequence blocks are added at the transmitting side of each underlying AM RLC entity (as illustrated in Figure 3A) or at each transmitting UM RLC entity (as illustrated in Figure 3B), then the re-sequence blocks may be added, as a separate block, before the respective RLC header generation and transmission buffer blocks, as shown in Figures 3A and 3B. Alternatively, the re-sequence blocks may be combined with the RLC header generation and transmission buffer blocks to form modified RLC header generation and transmission buffer blocks, respectively, wherein the conventional transmission buffer in the RLC header generation and transmission buffer block is replaced by the dual buffers and an RLC header is generated for (and an RLC SN is assigned to) a PDCP PDU after the PDCP PDU is read out from one of the dual buffers for delivery to the segmentation block below.

When a transmission opportunity presents at the lower layers associated with an RLC entity, as a general guideline, the PDCP PDUs stored in the prioritized buffer of that RLC entity may first be delivered, in sequence, to the segmentation block below when the prioritized buffer isn't empty, and the PDCP PDUs stored in the unprioritized buffer of that RLC entity may be delivered, in sequence, to the segmentation block below when the prioritized buffer of that RLC entity is empty.

The later approach of having the dual buffers replacing the conventional transmission buffer in the RLC header generation and transmission buffer block has an advantage of requiring less memory than the former two approaches, both of which add the multiple dual buffers, either at the transmitting PDCP entity or at the RLC entities as separate function blocks, in addition to the transmission buffers that currently exist in the RLC header generation and transmission buffer blocks.

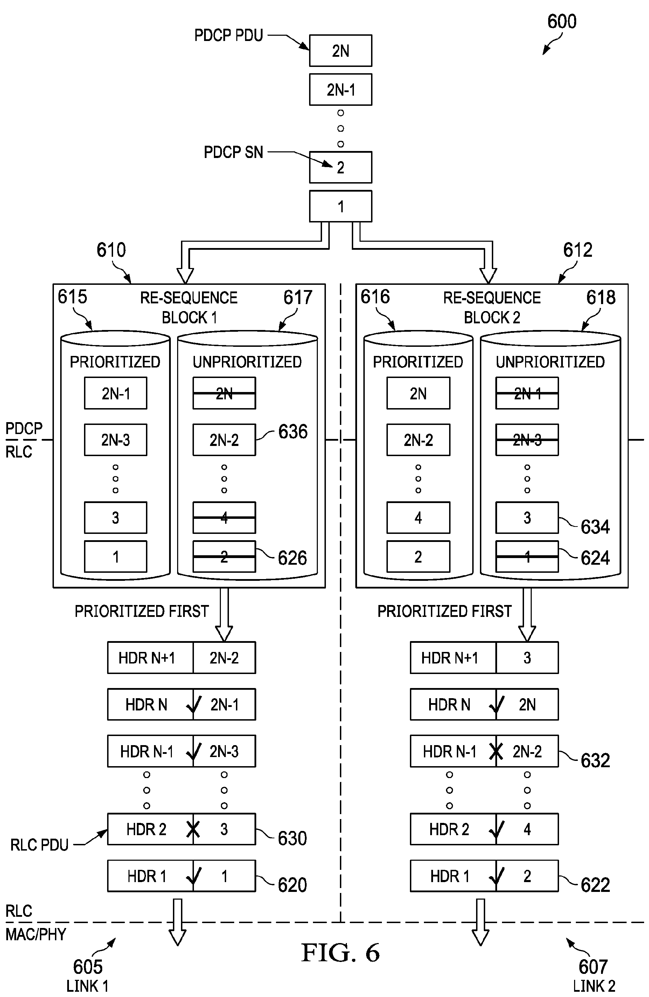

Figure 6 illustrates a diagram 600 of the transmission of an example stream of packets (PDCP PDUs), wherein a re-sequence block is added for each of two radio links 605 and 607 that are configured for PDCP duplication, each re-sequence block comprising the dual (prioritized and unprioritized) buffers, in accordance with the second example PDCP duplication scheme described above. In Figure 6, re-sequence blocks 610 and 612 are shown as being added across a border line between the PDCP layer and the RLC layer, to reflect the possible variations, wherein re-sequence blocks 610 and 612 may be located at the PDCP entity (as illustrated in Figure 2B), at the transmitting side of each underlying AM RLC entity (as illustrated in Figure 3A), or at each transmitting UM RLC entity (as illustrated in Figure 3B). In the latter two cases where re-sequence blocks 610 and 612 are added at the transmitting RLC entities, re-sequence blocks 610 and 612 may be added, as a separate block, before the respective RLC header generation and transmission buffer block, as shown in Figures 3A and 3B. Alternatively, re-sequence blocks 610 and 612 (the dual buffers) may replace the conventional transmission buffer in the RLC header generation and transmission buffer block to form a modified RLC header generation and transmission buffer block, with the RLC header being generated for (and an RLC SN being assigned to) a PDCP PDU after the PDCP PDU is read out from one of the dual buffers.

As shown in Figure 6, when receiving the stream of PDCP PDUs, a first re-sequence block 610 (shown as Re-sequence Block 1) associated with Link 1605 stores PDCP PDUs assigned with an odd PDCP SN in its prioritized buffer 615 and PDCP PDUs assigned with an even PDCP SN in its unprioritized buffer 617, while a second re-sequence block 612 (shown as Re-sequence Block 2) associated with Link 2 607 stores PDCP PDUs assigned with an even PDCP SN in its prioritized buffer 616 and PDCP PDUs assigned with an odd PDCP SN in its unprioritized buffer 618. Therefore, Re-sequence Block 1 610 prioritizes PDCP PDUs with an odd PDCP SN over PDCP PDUs with an even PDCP SN, while Re-sequence Block 2 612 does the opposite.

When a transmission opportunity presents at the lower (i.e., MAC and PHY) layers associated with Link 1 605, Re-sequence Block 1 610 may first read out the PDCP PDUs stored in prioritized buffer 615, in sequence (i.e., in the order that the PDCP PDUs are written into prioritized buffer 615), when prioritized buffer 615 isn't empty. Re-sequence Block 1 610 may read out the PDCP PDUs stored in unprioritized buffer 617 when prioritized buffer 615 is empty. Then, an RLC header (shown as "Hdr" followed by an integer in Figure 6) is generated for each PDCP PDU being read out to form one or more RLC PDUs. As described previously, an oversized PDCP PDU may be segmented into multiple segments, which are be carried in multiple RLC PDUs, respectively. The effect of segmentation isn't shown in Figure 6 for simplicity. Then, the generated RLC PDUs are submitted, in the order that they are generated, to the lower layers for transmissions over Link 1 605. Similarly, when a transmission opportunity presents at the lower (i.e., MAC and PHY) layers associated with Link 2 607, Re-sequence Block 2 612 may first attempt to read out the PDCP PDUs stored in prioritized buffer 616 before attempting to read out the PDCP PDUs stored in unprioritized buffer 618.

Figure 6 further shows that, as PDCP PDUs with odd (or even) PDCP SNs are successfully transmitted (shown as being checked by a check mark) over Link 1 605 (or Link 2 607), the duplicated copies of them are discarded (shown as being deleted by a deletion line) from unprioritized buffer 618 of Re-sequence Block 2 612 (or unprioritized buffer 617 of Re-sequence Block 1 610). As an example, PDCP PDUs #1 620 and #2 622 are successfully transmitted, duplicate PDCP PDUs #1 624 and #2 626 are discarded from unprioritized buffer 618 of Re-sequence Block 2 612 and unprioritized buffer 617 of Re-sequence Block 1 610, respectively. Figure 6 also shows that, as PDCP PDUs #3 630 and #(2N-2) 632 are transmitted unsuccessfully (shown as being crossed by an X mark) over Link 1 605 and Link 2 607, respectively, the duplicated copy of them (duplicate PDCP PDUs #3 634 and #(2N-2) 636) are kept in unprioritized buffer 618 of Re-sequence Block 2 612 and unprioritized buffer 617 of Re-sequence Block 1 610, respectively. Furthermore, when a transmission opportunity presents over Link 1 605 and prioritized buffer 615 is empty, the remaining PDCP PDUs in unprioritized buffers 617 may be read out for transmission over Link 1 605, as a necessary duplicated transmission as defined before. Similarly, when a transmission opportunity presents over Link 2 607 and prioritized buffer 616 is empty, the remaining PDCP PDUs in unprioritized buffers 618 may be read out for transmission over Link 2 607.

Partitioning a stream of PDCP PDUs by odd and even PDCP SNs for different prioritization over different radio links is a simple example of partitioning and is suitable when the number of radio links is two and the two radio links have similar performance, e.g., in terms of throughput and/or transmission error rate. As a generalization of the concept described herein, a stream of PDCP PDUs can be partitioned into a set of prioritized PDCP PDUs and a set of unprioritized PDCP PDUs for each radio link in accordance with the PDCP SNs of the PDCP PDUs and a formula that is unique for the each radio link. The sets of prioritized PDCP PDUs for different radio links may be mutually exclusive to minimize the race condition between the different radio links.

For example, if the number of radio links used in packet duplication is three and the throughput ratio among the three radio links (Link 1, Link 2, and Link 3) is roughly 1:2:1, then for Link 1, PDCP PDUs with a PDCP SN equal to 4n, where n is an integer, are designated as prioritized PDCP PDUs and PDCP PDUs with a PDCP SN unequal to 4n are designated as unprioritized PDCP PDUs; for Link 2, PDCP PDUs with a PDCP SN equal to (4n+1) or (4n+3) are designated as prioritized PDCP PDUs and PDCP PDUs with a PDCP SN unequal to (4n+1) and (4n+3) are designated as unprioritized PDCP PDUs; and for Link 3, PDCP PDUs with a PDCP SN equal to (4n+2) are designated as prioritized PDCP PDUs and PDCP PDUs with a PDCP SN unequal to (4n+2) are designated as unprioritized PDCP PDUs. In other words, if Priority(X, R) represents the priority values of a stream of PDCP PDUs for radio link R, where X represents a vector of the PDCP SNs associated with the stream of PDCP PDUs, and R is the index of a radio link over which the stream of PDCP PDUs are to be transmitted, for the example described above, then the Priority(X, R) values can be determined as the following:

$$\text{Priority}(X, 1) = ((X \bmod 4) == 0),$$

$$\text{Priority}(X, 2) = (((X \bmod 4) == 1) \text{ OR } ((X \bmod 4) == 3))),$$

$$\text{Priority}(X, 3) = ((X \bmod 4) == 2),$$

where mod represents the modulo operation, OR represents the logical or operation, and '==' represents the evaluation of an equality between the number on the left and the number on the right, and produces logic value 1 when the equality is true and logic value 0 when the equality is false. A Priority(X, R) value equal to 1 means that the associated PDCP PDU is a prioritized PDCP PDU for radio link R. A Priority(X, R) value equal to 0 means that the associated PDCP PDU is an unprioritized PDCP PDU for radio link R. A reversal of the assignment of the 0 and 1 values is possible. Then, the dual buffers associated with each radio link can sort out incoming stream of PDCP PDUs based on the Priority(X, R) values determined for the respective radio link, i.e., PDCP PDUs with Priority(X, R) value equal to 1 are to be stored in the prioritized buffer for radio link R, and PDCP PDUs with Priority(X, R) value equal to 0 are to be stored in the unprioritized buffer for radio link R.

In an embodiment, when multiple radio links are configured for PDCP duplication for uplink transmissions (which are transmissions in the direction from the UE to the network), the network may configure the UE with the formulas that are unique for different radio links and are to be used by the UE for computing the Priority(X, R) values of the stream of PDCP PDUs for each of the different radio links, and based thereon, placing the PDCP PDUs in the prioritized buffer or unprioritized buffer associated with the respective radio link. Such formulas may be modified whenever the network adds an additional secondary radio link to or removes a secondary radio link from the PDCP duplication configuration. Information of the formulas or modifications to the formulas may be conveyed from the network to the UE via radio resource control (RRC) signaling, such as a *RRCReconfiguration* message.

In an embodiment, when multiple radio links are configured for PDCP duplication for downlink transmissions (which are transmissions in the direction from the network to the UE), the transmitting PDCP entity, if the re-sequence block is located in the transmitting PDCP entity as shown in Figure 2B, or the transmitting RLC entities, if the re-sequence block is located in the transmitting RLC entities as shown in Figure 3A and 3B, may be configured with the formulas that are unique for different radio links and are to be used for computing the Priority(X, R) values of the stream of PDCP PDUs for each of the different radio links, and based thereon, placing the PDCP PDUs in the prioritized buffer or unprioritized buffer associated with the respective radio link.

In the embodiment where the PDCP duplication is configured for downlink transmissions, as described previously, when PDCP duplication is provided using dual connectivity (DC) (i.e., through differently located transmitting nodes), the transmitting PDCP entity and some underlying RLC entity(s) are in the MN, while other underlying RLC entity(s) are in the secondary node. In a centralized unit - distributed unit (CU-DU) split network, the transmitting PDCP entity may be centrally located in a gNB-CU, while the different underlying transmitting RLC entities may be placed in differently located gNB-DUs. In these situations, adding the function for executing a unique formula in each of the multiple transmitting RLC entities in order to sort out the priority of PDCP PDUs for the each transmitting RLC entity requires the MN and the secondary node or all gNB-DUs have the same interpretation and execution of the provided formulas. Hence, the demand for the standardization efforts and implementation efforts for ensuring interoperability between the MN and secondary node or among the gNB-CU and gNB-DUs, which may be manufactured by different vendors, is increased. On the other hand, adding the multiple dual buffers in the transmitting PDCP entity, although easing the interoperability requirement between the MN and secondary node or among the gNB-CU and gNB-DUs, increases the memory requirement (as compared to using the dual buffers to replace the conventional transmission buffer in the RLC header generation and transmission buffer block in the multiple transmitting RLC entities).

Therefore, in accordance with a third example architecture embodiment, some functions of the re-sequence block, such as determining the Priority(X, R) value of each PDCP PDU for each of the multiple radio links, are performed at the transmitting PDCP entity, as illustrated in Figure 2B, while some other functions of the re-sequence block, such as storing the PDCP PDU into one of the dual buffers in accordance with the determined Priority(X, R) value, are performed at the transmitting RLC entities, for example, as illustrated in Figures 3A and 3B, or as previously discussed, with the dual buffers replacing the conventional transmission buffer in the RLC header generation and transmission buffer block and with the RLC header being generated for (an RLC SN being assigned to) a PDCP PDU after the PDCP PDU is read out from one of the dual buffers for transmission.

More specifically, in accordance with a third example PDCP duplication scheme, as the Routing/Duplication block in the transmitting PDCP entity duplicates the stream of PDCP PDUs for the multiple radio links, the transmitting PDCP entity also determines the Priority(X, R) value of each PDCP PDU for each of the multiple radio links. For example, the Priority(X, R) value may be determined based on the PDCP SN of the PDCP PDU (as X), the index of the radio link (as R), and the formulas that the transmitting PDCP entity is configured with. Then, the transmitting PDCP entity conveys each PDCP PDU of the stream of PDCP PDUs to each underlying RLC entity, along with an indication of the Priority(X,R) value determined for the each PDCP PDU for the radio link associated with the each underlying RLC entity. Then, each underlying RLC entity stores each PDCP PDU of the stream of PDCP PDUs in its prioritized or unprioritized buffer in accordance with the Priority(X, R) value conveyed and associated with the each PDCP PDU. When a transmission opportunity presents at the lower layers associated with an RLC entity, as a general guideline, the PDCP PDUs stored in the prioritized buffer of that RLC entity may be first delivered, in sequence, along with the RLC headers generated for them, to the segmentation block below when the prioritized buffer isn't empty, and the PDCP PDUs stored in the unprioritized buffer of that RLC entity may be delivered, in sequence, along with the RLC headers generated for them, to the segmentation block below when the prioritized buffer is empty.

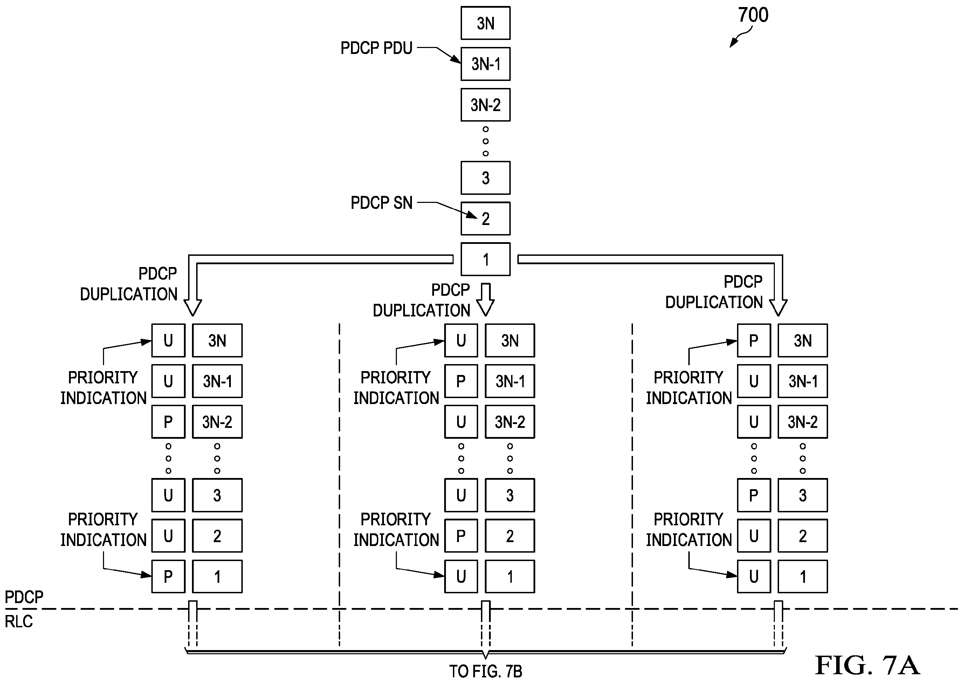

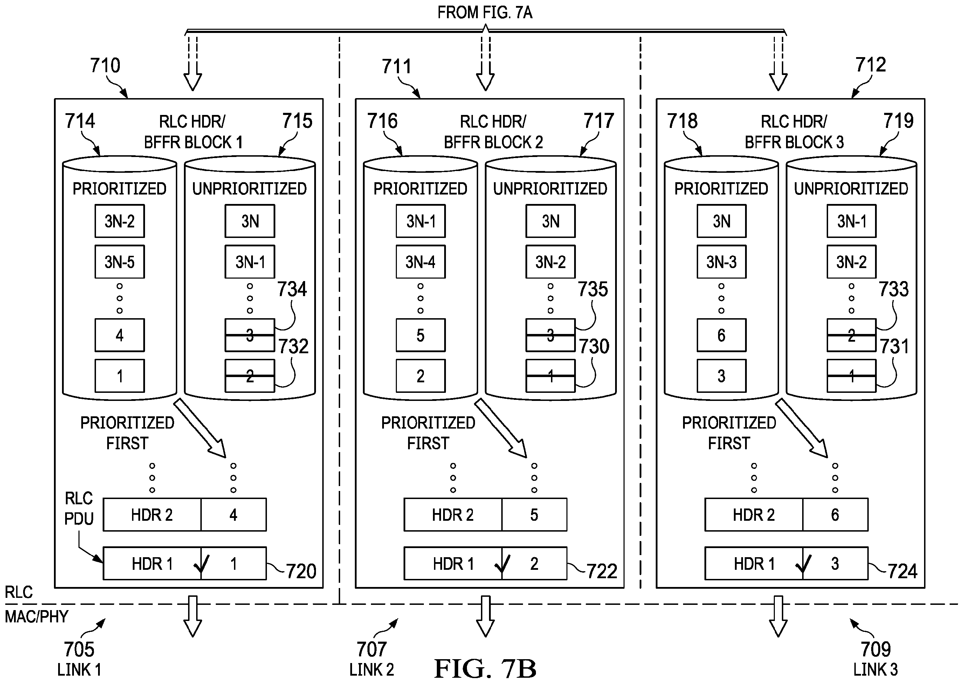

Figures 7A and 7B illustrate a diagram 700 of the transmission of an example stream of packets (PDCP PDUs) being transmitted over three radio links (shown as Link 1 705, Link 2 707, and Link 3 709 in Figures 7A and 7B), in accordance with the third example PDCP duplication scheme. As shown in Figures 7A and 7B, while duplicating the stream of PDCP PDUs for the three radio links, the transmitting PDCP entity determines that a PDCP PDU with a PDCP SN equal to (3n+1), where n is an integer, is a prioritized PDCP PDU for Link 1 705 and an unprioritized PDCP PDU for Link 2 707 and Link 3 709, and based thereon, attaches a priority indication of "P" (or value 1), representing prioritized, to the copy of that PDCP PDU for Link 1 705, and attaches a priority indication of "U" (or value zero), representing unprioritized, to the copy of that PDCP PDU for Link 2 707 and Link 3 709. The transmitting PDCP entity also determines that a PDCP PDU with a PDCP SN equal to (3n+2) is a prioritized PDCP PDU for Link 2 707 and an unprioritized PDCP PDU for Link 1 705 and Link 3 709, and based thereon, attaches a priority indication of "P" or "U" to the respective copy of that PDCP PDU accordingly. The transmitting PDCP entity also determines that a PDCP PDU with a PDCP SN equal to 3n is a prioritized PDCP PDU for Link 3 709 and an unprioritized PDCP PDU for Link 1 705 and Link 2 707, and based thereon, attaches a priority indication of "P" or "U" to the respective copy of that PDCP PDU accordingly. Then, the transmitting PDCP entity conveys the stream of PDCP PDUs to each underlying RLC entity, along with the associated priority indications.

As shown in Figures 7A and 7B, the RLC header generation and transmission buffer (labeled RLC Hdr/Bffr) block of each underlying RLC entity contains the dual buffers (prioritized buffer and unprioritized buffer), instead of the conventional transmission buffer. For example, RLC Hdr/Bffr block 1 710, which serves Link 1 705, contains prioritized buffer 714 and unprioritized buffer 715; RLC Hdr/Bffr block 2 711, which serves Link 2 707, contains prioritized buffer 716 and unprioritized buffer 717; and RLC Hdr/Bffr block 3 712, which serves Link 3 709, contains prioritized buffer 718 and unprioritized buffer 719. The stream of PDCP PDUs obtained from the transmitting PDCP entity are sorted into prioritized buffer and unprioritized buffer of each RLC entity based on the associated priority indications provided to the each RLC entity. For example, as shown in Figures 7A and 7B, PDCP PDU #1 is sorted into prioritized buffer 714 for Link 1 705, unprioritized buffer 717 for Link 2 707, and unprioritized buffer 719 for Link 3 709. When a transmission opportunity presents at the lower layers of Link 1 705, Link 2 707, or Link 3 709, the associated dual buffers may attempt to empty its prioritized buffer before attempting to empty its unprioritized buffer. As shown in Figures 7A and 7B, PDCP PDUs #1 720, #2 722, and #3 724 are successfully transmitted (shown as being checked by a check mark) over Link 1 705, Link 2 707, and Link 3 709, respectively, the duplicate copies of them are removed from the unprioritized buffers associated with the other radio links, respectively. For example, duplicated PDCP PDUs #1 730 and 731 are removed from unprioritized buffers 717 and 719 (shown as being deleted by a deletion line), respectively, duplicated PDCP PDUs #2 732 and 733 are removed from unprioritized buffers 715 and 719, respectively, and duplicated PDCP PDUs #3 734 and 735 are removed from unprioritized buffers 715 and 717.

In the second and third example PDCP duplication schemes described above, generally speaking, data stored in a prioritized buffer are submitted for transmission before data stored in the corresponding unprioritized buffer of the same re-sequence block. However, as new data may continue to arrive from the higher layer above the transmitting PDCP entity for transmission, the newly arrived data continues to be sorted into the prioritized buffer or the unprioritized buffer of each radio link according to the respective prioritization algorithm or the respective priority indication. Therefore, it is totally possible that a prioritized buffer may not be truly empty for an extended amount of time. In this situation, if data stored in the unprioritized buffer of a first radio link needs to be transmitted because the transmission of the same data (as a prioritized data) has been attempted over a second radio link and failed, then the data may have to wait for a period that is too long to meet a latency requirement (if the data must wait until the prioritized buffer of the first radio link is completely empty), in which case, the data stored in the unprioritized buffer will lose its function as a backup to boost the overall transmission reliability.

Therefore, apparatus and methods are provided herein, which may be used to limit how long the pending transmission of a duplicated (and unprioritized) data over a radio link may be deferred if the transmission of the duplicated data hasn't yet been cancelled due to a successful transmission of the same data over another radio link. In one embodiment, if the PDCP SN of the next data to be transmitted from the prioritized buffer has exceeded the PDCP SN of the next data to be transmitted from the unprioritized buffer of the same radio link by more than a pre-specified threshold, the next data in the unprioritized buffer is to be transmitted first; otherwise, the next data in the prioritized buffer is to be transmitted first. Using the illustration in Figures 7A and 7B as an example, if the pre-specified threshold is 4, then, after PDCP PDUs #1 and #4 queued in prioritized buffer 714 are transmitted over Link 1 705, the next PDCP PDU queued in prioritied buffer 714 is PDCP PDU #7 (which isn't shown in Figures 7A and 7B due to limited space). Then, when a transmission opportunity present at the lower layer of Link 1 705, the RLC entity serving Link 1 705 determines which PDCP PDU is the first PDCP PDU currently queued in unprioritized buffer 715 for transmission. By that moment, if duplicated PDCP PDU #2 732 has already been removed from unprioritized buffer 715, e.g., due to the successful transmission of PDCP PDU #2 722 over Link 2 707, the first PDCP PDU still queued in unprioritized buffer 715 is a next unprioritized PDCP PDU (for Link 1 705) having a PDCP SN greater than 2 (such as 3, 5, 6, etc.). In this situation, PDCP PDU #7 queued in prioritied buffer 714 takes priority and therefore is transmitted first. On the other hand, if duplicated PDCP PDU #2 732 hasn't been removed from unprioritized buffer 715 yet, duplicated PDCP PDU #2 732 takes priority over PDCP PDU #7 queued in prioritized buffer 714, because 7 minus 2 exceeds the threshold of 4.

Generally speaking, the larger the pre-specified threshold (for the gap between the two PDCP SNs) is, the greater the chance to cancel an unnecessary duplicated transmission. The pre-specified threshold may be determined based on how much delay can be tolerated in successfully delivering the data over any of the multiple radio links. The longer the delay that can be tolerated, the larger the pre-specified threshold.

In another embodiment, if a negative acknowledgement (NACK) of a data transmitted (as a prioritized data) over a first radio link has been explicitly received from the data recipient, then a copy of the same data queued in the unprioritized buffer of a second radio link may take a priority over data in the prioritized buffer of the second radio link and therefore be the next to be transmitted over the second radio link. Examples of the explicit NACK received include a HARQ NACK, an ARQ NACK, and for 5G NR UL transmissions, an explicit retransmission grant for a retransmission of the failed data transmission. Using the illustration in Figure 6 as an example, after PDCP PDU #3 630 is unsuccessfully transmitted over Link 1 605, e.g., after a HARQ NACK or an RLC NACK (which is an ARQ NACK at the RLC sublayer) indicating a failure in decoding PDCP PDU #3 630, or for UL transmission, a retransmission grant has been received from the data recipient, then when a next transmission opportunity presents at the lower layers of Link 2 607, duplicated PDCP PDU #3 634 queued in unprioritized buffer 618 takes priority over a next PDCP PDU queued in prioritized buffer 616 for transmission and therefore is transmitted before the next PDCP PDU queued in prioritized buffer 616, instead of waiting until the last prioritized PDCP PDU for Link 2 607 (e.g., PDCP PDU #2N) is cleared, as shown in Figure 6.

The second example PDCP duplication scheme, more specifically, the variant of it with the re-sequence blocks being located in the RLC entities, and the third example PDCP duplication scheme described previously have an advantage of reducing memory requirement by replacing the conventional transmission buffer in the RLC header generation and transmission buffer block in the underlying RLC entities with the dual buffers. On the other hand, the second example PDCP duplication scheme, more specifically, the variant of the second example PDCP duplication scheme with the re-sequence blocks being located in the transmitting PDCP entity, and the third example PDCP duplication scheme have an advantage in that the priority values of the PDCP PDUs for the multiple radio links are determined centrally by the transmitting PDCP entity.

In the situation of the second example PDCP duplication scheme with the re-sequence blocks being located in the transmitting PDCP entity, the underlying RLC entities may be unaware that the order of the PDCP PDUs has been altered and they each submit PDCP PDUs to the lower layers for transmission in the order that the PDCP PDUs are provided to them. In the situation of the third example PDCP duplication scheme, the underlying RLC entities each receives a PDCP PDU along with a priority value of the PDCP PDU that is indicated to them so that they can store the PDCP PDU in the corresponding buffer in accordance with the priority value. In both situations, the underlying RLC entities don't need to know how the transmitting PDCP entity determines the priority values of the PDCP PDUs or what formulas are being used and the transmitting PDCP entity bears the responsibility for ensuring the prioritized PDCP PDUs designated for different radio links are mutually exclusive in order to minimize the race condition among the different radio links, and thereby making it easier to achieve interoperability between the MN and secondary node or among the gNB-CU and gNB-DUs, which may be manufactured by different vendors.

On the UE side, conveying a PDCP PDU along with an indication of the associated priority value from the transmitting PDCP entity to each underlying RLC entity can be readily handled in implementation of internal communications between the PDCP entity and the underlying RLC entities, because they normally are co-located within the same UE device. However, on the network side, when the transmitting PDCP entity and the underlying RLC entities aren't co-located or manufactured by a same vendor, e.g., being in gNB-CU and gNB-DUs, respectively, or being in the MN and secondary node, respectively, the indicating of the priority values needs to be standardized in order to facilitate interoperability between these network equipments. For example, a message referred to as a GPRS Tunnelling Protocol (GTP) encapsulated user Plane Data Unit (G-PDU) message, as specified in 3GPP TS 29.281, can currently be used for conveying a PDCP PDU across the interface between the MN and the secondary node (which interface is referred to as the Xn interface) or between the gNB-CU and gNB-DUs (which interface is referred to as the F1 interface), wherein the PDCP PDU is carried in a Transport PDU (T-PDU) field in the G-PDU message.

Therefore, according to an example embodiment, a currently available Spare bit (i.e., a reserved bit) in a GTP user (GTP-U) Extension Header in the G-PDU message can be converted and used as the priority indication bit, with a value 1 in this bit indicating the associated PDCP PDU is a prioritized PDCP PDU and a value 0 (zero) in this bit indicating the associated PDCP PDU is an unprioritized PDCP PDU. A reversal of the value meanings is possible. For example, the GTP-U Extension Header contains an NR RAN Container, as specified in TS 29.281, and the NR RAN Container contains a DL USER DATA (PDU Type 0) frame, as specified in TS 38.420, and a currently available Spare bit in the DL USER DATA (PDU Type 0) frame, as specified in TS 38.425 v16.0.0, can be converted to and specified as the priority indication bit.

According to example embodiments, methods and apparatus are also provided for a device to transmit a status report regarding a first stream of packets received from a peer device over a plurality of radio links (i.e., the second goal described before), the status report being transmitted in order to assist the peer device in preventing duplicated copies of the first stream of packets from being transmitted to the device (i.e., the first goal described before). The device may be a UE, an eNB, a gNB, or a gNB-CU. The device receives a plurality of second streams of packets over the plurality of radio links, each second stream of packets being a subset of the first stream of packets. The device detects duplicated packets among the plurality of the second streams of packets, and based thereon, forms the first stream of packets comprising the union of packets in the plurality of the second streams of packets by removing the duplicated packets detected and reordering the remaining packets in the union. Then, the device transmits a status report to the peer device, the status report comprising information associated with packets among the first stream of packets and their status as received. The status report may further include information associated with packets not among the first stream of packets and their status of not received (but still expected). The current RLC Status PDU feedback scheme, as described before, provides for the reception status of packets received within a single radio link. Furthermore, the RLC Status PDU is available only for AM RLC, not for UM RLC. Therefore, the new status report for PDCP duplication should be carried out above the RLC sublayer, i.e., at the PDCP sublayer.

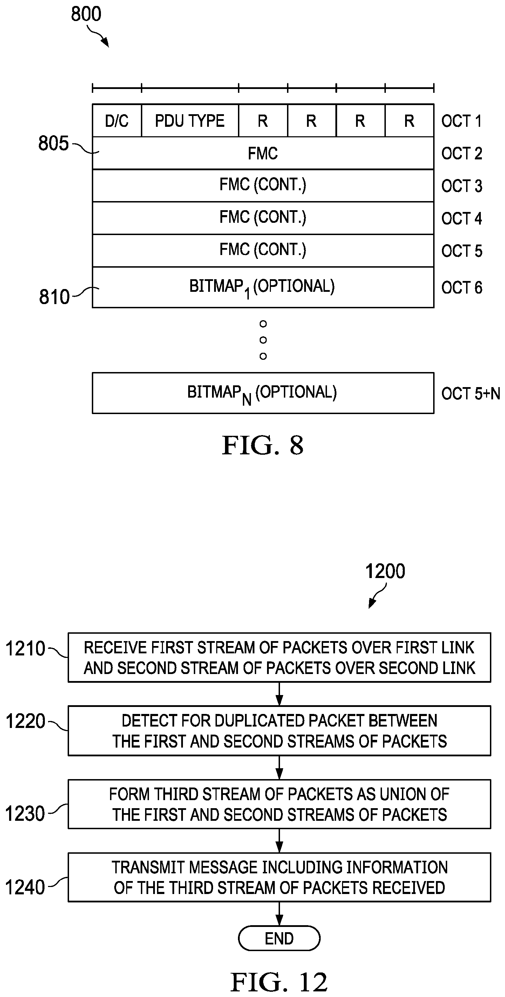

In accordance with an example embodiment, the status report has the same format and content as the conventional PDCP Status Report, which is a PDCP Control PDU specified in 3GPP TS 38.323. Rules are added for triggering transmissions of the PDCP Status Report when PDCP duplication is configured. Figure 8 illustrates a diagram 800 of the format and content of the PDCP Status Report. As shown in Figure 8, the PDCP Status Report includes a First Missing COUNT (FMC) field 805, which indicates the COUNT value of the first missing PDCP SDU that hasn't been delivered to the higher layer yet but is still expected, and optionally a Bitmap field 810. The COUNT value of a PDCP SDU comprises a Hyper Frame Number (HFN) and the PDCP SN assigned to the PDCP SDU when forming the associated PDCP PDU. The HFN value is initialized to value 0 (zero). On a transmitting PDCP entity, when the PDCP SN wrap-around (carry-over) occurs during PDCP SN assignment, the HFN is incremented by 1 and then is used in forming the COUNT values associated with that PDCP SN and those PDCP SNs assigned thereafter until the PDCP SN wrap-around occurs again. A receiving PDCP entity keeps tracking the HFN value by monitoring the PDCP SN wrap-around events among the PDCP PDUs received, and then reconstructs the COUNT value of a received PDCP SDU by concatenating the HFN value and the PDCP SN associated with the received PDCP SDU. Bitmap field 810 is included in the PDCP Status Report when at least one PDCP SDU is received but can't be delivered to the higher layer due to the missing PDCP SDU(s) ahead of it. Each bit in the Bitmap field indicates a status of a PDCP SDU with a COUNT value greater than the FMC value, with the first bit in the Bitmap corresponds to the first PDCP SDU after the first missing PDCP SDU. A value 0 in a bit in the Bitmap field indicates that the corresponding PDCP SDU hasn't been received, and a value 1 in the bit indicates that the corresponding PDCP SDU has been received successfully.

Therefore, by transmitting the PDCP Status Report to the data-transmitting PDCP entity, the data-receiving PDCP entity informs the transmitting PDCP entity that any PDCP SDUs with a COUNT value less than the FMC value have been delivered to the higher layer (hence has been received), and if Bitmap field 810 is present in the PDCP Status Report, any PDCP SDUs with a corresponding bit in the Bitmap field being set to value 1 have been received. Therefore, any duplicated copies of these received PDCP SDUs, or PDCP PDUs or RLC PDUs that are generated from these PDCP SDUs, if not transmitted yet, can be discarded by the data-transmitting device.

Currently, the motivation to transmit a PDCP Status Report is to indicate, during a mobility event such as a handover or radio link failure recovery event, packets not received but still expected, so that the lost packets can be retransmitted to ensure low packet loss due to the mobility event. Therefore, the PDCP Status Report can currently be used on an AM DRB, but not on a UM DRB or an SRB. This is because AM DRBs tend to be used for data that require low packet loss rate during mobility events, and retransmission is a solution for such applications. However, for UM DRBs, any packet loss during mobility events is currently either tolerated or mitigated through other means such as a human repeating a voice. For SRBs, data being transmitted over an SRB are control messages, which cannot be lost during a mobility event in the first place, otherwise the mobility event cannot be successfully completed. On the other hand, for PDCP duplication, the motivation to transmit a PDCP Status Report is to indicate packets already received so that a duplicate of the received packets can be discarded without the transmission taking place. Therefore, in accordance with an example embodiment of the present disclosure, the PDCP Status Report can be used on UM DRBs and SRBs (as well as AM DRBs) that are configured with PDCP duplication.

According to the current 3GPP specifications, a transmission of the PDCP Status Report by the PDCP entity can be triggered only by RRC signaling or an RRC event. There are no specifications nor motivations for the PDCP entity to initiate a transmission of the PDCP Status Report on its own. However, in accordance with an example embodiment of the present disclosure, a transmission of the PDCP Status Report can be initiated by the data-receiving PDCP entity without being requested by the associated RRC entities (including the peer's RRC entity) above it or any event (such as a mobility event) occurring at the RRC layer. For example, in the first example PDCP duplication scheme described above and illustrated in Figure 5, when the PDCP SNs of two PDCP PDUs that are most recently received over Link 1505 and Link 2 507, respectively, are approaching one another (e.g., a gap between these two PDCP SNs is below a specific threshold), the data-receiving PDCP entity can determine, on its own, that it is the time to send a PDCP Status Report to assist the data-transmitting PDCP entity with cancelling duplicated transmissions of data that have been successfully transmitted, otherwise, the unnecessary duplicated transmissions may occur. In accordance with an alternative example embodiment, the PDCP Status Report may be transmitted by the data-receiving PDCP entity in response to receiving a request from the data-transmitting PDCP entity of the peer device, the data-transmitting PDCP entity initiating the request without itself being requested by the associated RRC entities (including the peer's RRC entity) above it or any event occurring at the RRC layer. The request to solicit a PDCP Status Report may be conveyed in a new PDCP Control PDU referred to as the PDCP Status Request, e.g., with the PDU type being value 3.

Alternatively, the request to solicit a PDCP Status Report may be conveyed in a new Poll bit in the PDCP header of a PDCP PDU carrying data (which is also referred to as a PDCP Data PDU) from the data-transmitting PDCP entity to the data-receiving PDCP entity. The new Poll bit may take the place of one of the currently reserved R bits in the PDCP header of the PDCP (Data) PDU. For example, when the data-transmitting PDCP entity is about to transmit the last PDCP PDU available in its buffer(s), the data-transmitting PDCP entity may set the Poll bit in the PDCP header of the last PDCP PDU to value 1 to request its peer entity (i.e., the data-receiving PDCP entity) to send back a PDCP Status Report. An alternate definition of the value requesting the peer entity to send back the PDCP Status Report is possible.

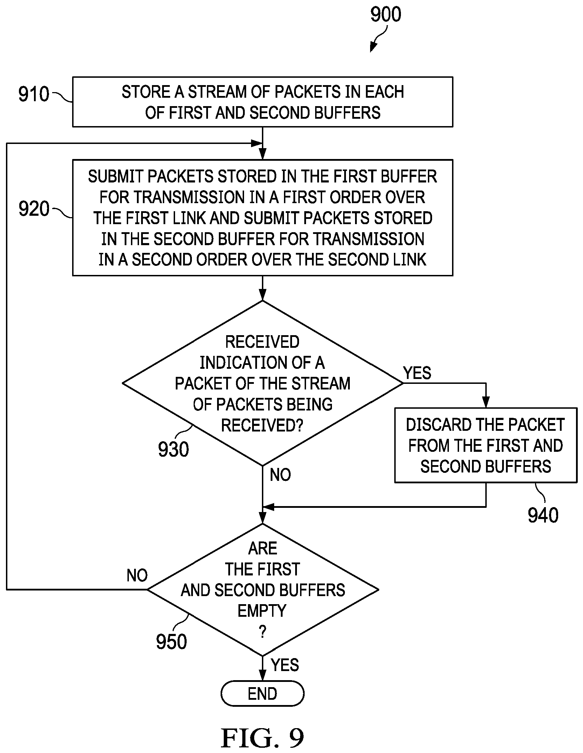

Figure 9 illustrates a flow diagram of example operations 900 occurring in a device. Operations 900 may be indicative of operations occurring in a device as the device transmits a stream of packets with packet duplication over a plurality of communication links. The device may be a UE or a network node such as an eNB or a gNB.

Operations 900 begin with the device storing the stream of packets in each of a first and second buffers (step 910), the first and second buffers being respectively associated with a first and second radio links between the device and a peer device, the second radio link being different from the first radio link. The storing may occur after the stream of the packets is duplicated for the first and second radio links. The device begins submitting packets stored in the first buffer for transmission in a first order over the first radio link and submitting packets stored in the second buffer for transmission in a second order over the second radio link (step 920), the second order being different from the first order. For example, the first order is FIFO and the second order is LIFO, the first buffer being a FIFO buffer and the second buffer being a LIFO buffer. For another example, the stream of packets are partitioned into a first set of packets and a second set of packets, the first order is to transmit the first set of packets before transmitting the second set of packets, and the second order is to transmit the second set of packets before transmitting the first set of packets.

While submitting the packets stored in the first and second buffers for transmission over the first and the second radio links, respectively, the device determines whether it has received an indication of a packet of the stream of packets having been received by the peer device (step 930). If the device determines that it has received the indication of a packet of the stream of packets having been received by the peer device, the device discards the packet (as indicated by the indication) from the first and second buffers (step 940). In other words, if the device has received an indication of a packet (or packets) of the stream of packets having been received by the peer device, the packet (or packets) have been received by the peer device, and the device discards the packet (or packets) indicated by the indication from the first and second buffers. After step 940 or if the device determines that it has not received an indication of a packet of the stream of packets having been received by the peer device (hence being successfully transmitted) in step 930, the device further determines whether the first and second buffers are empty (step 950). If no, the device goes back to step 920 to continue to transmit remaining packets in the first and second buffers in the respective orders over the first and second radio links, respectively. If the first and second buffers are empty, operations 900 may end.

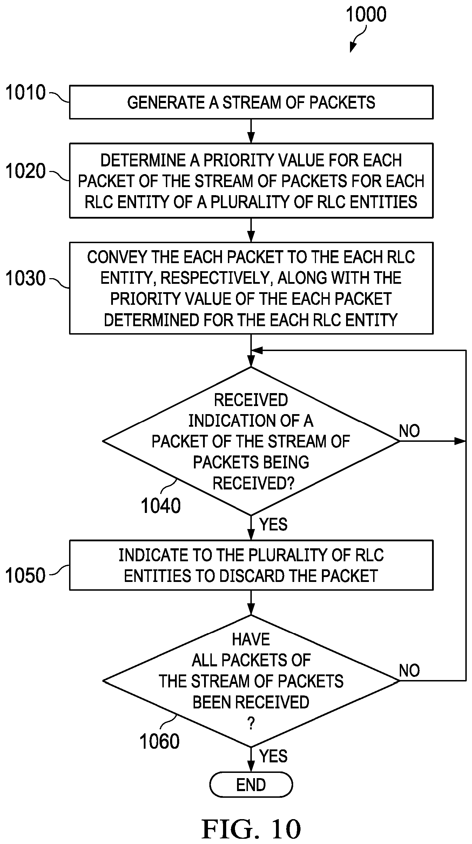

Figure 10 illustrates a flow diagram of example operations 1000 occurring in a PDCP entity of a device. Operations 1000 may be indicative of operations occurring in a PDCP entity of a device as the device uses the PDCP entity for submitting a stream of packets to a plurality of RLC entities for transmission over a plurality of radio links. The device may be a UE or a network node such as an eNB, a gNB, or a gNB-CU.

Operations 1000 begin with the PDCP entity of the device generating a stream of packets (step 1010). For example, the stream of packets is a stream of PDCP PDUs. The stream of PDCP PDUs is generated from a stream of PDCP SDUs that is obtained from a higher layer entity above the PDCP entity of the device. The higher layer entity may be an RRC entity, a SDAP entity, or an IP entity. The PDCP entity of the device may assign a PDCP SN to each packet of the stream of packets in an incremental manner. Then, the PDCP entity of the device determines a priority value for each packet of the stream of packets for each RLC entity of the plurality of RLC entities (step 1020). Each priority value indicates that the associated packet is a prioritized packet or an unprioritized packet for the associated RLC entity. For example, the PDCP entity may determine a priority value for a packet based on a PDCP SN assigned to the packet and a formula that is unique for the each RLC entity, wherein the PDCP SN is an input to the formula. The uniqueness of the formula for the each RLC entity may be achieved by using a unique index number associated with a radio link (and hence unique for the RLC entity associated with the radio link) as an input to the formula.

The PDCP entity of the device conveys each packet of the stream of packets to each RLC entity of the plurality of RLC entities, respectively, among with the priority value of the each packet determined for the each RLC entity (step 1030). For example, the packet and the associated priority value may be conveyed to an RLC entity located within the device through internal cross-layer communication between the PDCP entity and the RLC entity. For another example, the packet and associated priority value may be conveyed to an RLC entity that isn't co-located with the PDCP entity using a G-PDU message over the Xn interface between the device (which is an MN hosting the PDCP entity) and a secondary node hosting the RLC entity, or over the F1 interface between the device (which is a gNB-CU hosting the PDCP entity) and a gNB-DU hosting the RLC entity, the packet being carried in the T-PDU field of the G-PDU message and the priority value being carried in a priority indication field in an GTP-U Extension Header of the G-PDU message.

The PDCP entity of the device determines whether it has received an indication of a packet (or packets) of the stream of packets having been received by a peer device (step 1040). If no, the PDCP entity of the device goes back to step 1040. If yes, the PDCP entity of the device indicates to the plurality of RLC entities to discard the packet (or packets) (step 1050). The PDCP entity of the device further determines whether all packets of the stream of packets have been received by the peer device (step 1060). If no, the PDCP entity of the device goes back to step 1040. If yes, operations 1000 may end.

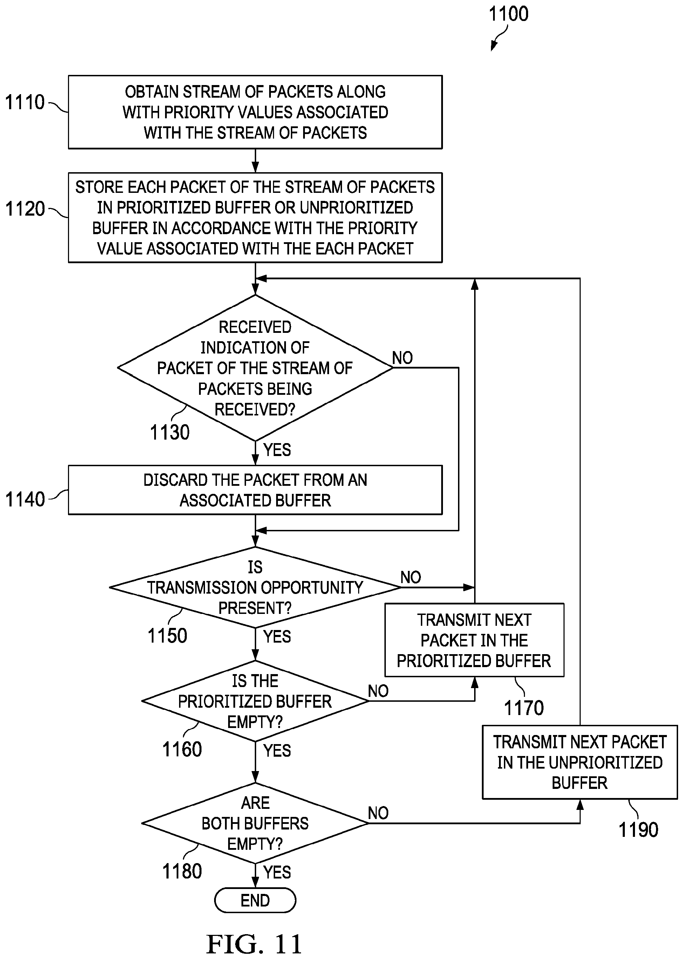

Figure 11 illustrates a flow diagram of example operations 1100 occurring in an RLC entity of a device. Operations 1000 may be indicative of operations occurring in an RLC entity of a device, as the device uses the RLC entity for transmitting a stream of packets over one radio link of a plurality of radio links. The device may be a UE or a network node such as an eNB, a gNB, or a gNB-DU.

Operations 1100 begin with the RLC entity of the device obtaining a stream of packets along with priority values associated with the stream of packets, respectively (step 1110). For example, the stream of packets is a stream of PDCP PDUs obtained from a PDCP entity that the RLC entity is associated with. In one example, the PDCP entity is located within the device, in which case the stream of packets along with the associated priority values are obtained from the PDCP entity through internal cross-layer communication between the PDCP entity and the RLC entity. In another example, the PDCP entity isn't located in the device, in which case each packet of the stream of packets along with the associated priority value is obtained from the PDCP entity using a G-PDU message over the Xn interface between the device (which is a secondary node hosting the RLC entity) and an MN hosting the PDCP entity, or over the F1 interface between the device (which is a gNB-DU hosting the RLC entity) and a gNB-CU hosting the PDCP entity, the packet being carried in the T-PDU field of the G-PDU message and the priority value being carried in a priority indication field in an GTP-U Extension Header of the G-PDU message. The RLC entity of the device stores each packet of the stream of packets in a prioritized buffer or an unprioritized buffer in accordance with the priority value associated with the each packet (step 1120). For example, the RLC entity of the device stores a packet with a priority value of 1 (for prioritized) in the prioritized buffer and a packet with a priority value of 0 (for unprioritized) in the unprioritized buffer.

The RLC entity of the device determines whether it has received an indication of a packet of the stream of packets having been received by a peer device (step 1130). For example, when the RLC entity and a second RLC entity that is serving a second radio link of the plurality of radio links are not co-located within the same device, the second RLC entity, in response to receipt of a positive acknowledgment from a peer device, may send a second indication indicating that the packet of the stream of packets has been received by the peer device to the PDCP entity (which both the first and the second RLC entities are associated with). The PDCP entity, in response to receipt of the second indication from the second RLC entity, sends the indication to the RLC entity, where the positive acknowledgement may comprise an HARQ ACK or an RLC ACK associated with the transmission of the packet over the second radio link, or for 5G NR UL transmissions, a timer expired at the transmitter, the timer being started when the packet is transmitted over the second radio link and to be stopped and reset if a retransmission scheduling grant for a retransmission of the packet over the second radio link is received before the timer expires. For another example, when the RLC entity and a second RLC entity serving a second radio link of the plurality of radio links are co-located within the same device, the indication may be exchanged directly from the second RLC entity to the RLC entity instead of having to go through the transmitting PDCP entity. In this situation, the RLC entity may receive the indication from the second RLC entity, where the second RLC entity provides the indication based on the receipt of a positive acknowledgement that the second RLC entity received from a peer device.

If the RLC entity of the device determines that it has not received the indication in step 1130, the RLC entity of the device goes to step 1150. If the RLC entity of the device determines that it has received the indication in step 1130, the RLC entity of the device discards the packet from the prioritized buffer or the unprioritized buffer, whichever one has the packet queued for transmission (step 1140).

The RLC entity of the device determines whether a transmission opportunity is present at its associated lower layer (MAC and PHY) entities (step 1150). If no, the RLC entity of the device goes back to step 1150. If yes, the RLC entity of the device further determines whether its prioritized buffer is empty (step 1160). If the prioritized buffer isn't empty, the RLC entity of the device delivers a next packet queued in its prioritized buffer to the lower layer entities for transmission over the one radio link of the plurality of radio links (step 1170). If the prioritized buffer is empty, the RLC entity of the device further determines whether both its prioritized and unprioritized buffers are empty (step 1180). If no, the RLC entity of the device delivers a next packet queued in its unprioritized buffer to the lower layer entities for transmission over the one radio link of the plurality of radio links (step 1190). The RLC entity of the device goes back to step 1130. If the RLC entity of the device determines that both buffers are empty in step 1180, operations 1100 may end.

As an alternative to steps 1160-1190 illustrated in Figure 11, when arriving at step 1160, the RLC entity of the device determines whether the PDCP SN of the next data to be transmitted from its prioritized buffer has exceeded the PDCP SN of the next data to be transmitted from its unprioritized buffer by more than a pre-specified threshold. If yes, the RLC entity submits the next data in its unprioritized buffer to the lower layers for a transmission first. If no, the RLC entity submits the next data in its prioritized buffer to the lower layers for a transmission first. When both buffers are empty, the alternative operations may end.

As a second alternative to steps 1160-1190 illustrated in Figure 11, when arriving at step 1160, the RLC entity of the device determines whether there is a data in its unprioritized buffer, a duplicate of which data has been transmitted by another RLC entity over another radio link of the plurality of radio links but that transmission has failed. If yes, the RLC entity submits that data to the lower layers for a transmission first. If no, the RLC entity submits the next data in its prioritized buffer to the lower layers for a transmission first. When both buffers are empty, the second alternative operations may end.

Figure 12 illustrates a flow diagram of example operations occurring in a device. Operations 1200 may be indicative of operations occurring in a device, as the device receives streams of packets with packet duplication over a plurality of radio links. The device may be a UE or a network node such as an eNB, a gNB, or a gNB-CU.

Operations 1200 begin with the device receiving, from a peer device, a first stream of packets over a first radio link of the plurality of radio links and a second stream of packets over a second radio link of the plurality of radio links (step 1210). For example, the stream of packets is a stream of PDCP PDUs. The device detects for duplicated packet(s) between the first and second stream of packets (step 1220). For example, the device may detect a duplicated packet based on the PDCP SNs respectively associated with a first packet of the first stream of packets and a second packet of the second stream of packets being equal, and based thereon, determines that the second packet is a duplicated packet. For another example, if the COUNT value associated with a third packet of the first or second stream of packets is less than a FMC value that has previously been reported by the data recipient, the device determines that the third packet has been delivered to its higher layer previously, and based thereon, determines that the third packet is a duplicated packet.

The device forms a third stream of packets as the union of the first and second streams of packets by removing the duplicated packets detected and re-ordering the remaining packets in the union, e.g., in accordance with the PDCP SNs associated with the remaining packets (step 1230). The device transmits information of the third stream of packets received (step 1240). For example, the device may transmit a control message (e.g., a PDCP Status Report) to the peer device, the control message including information of the third stream of packets and their respective status as received. The control message may further include information associated with a fourth stream of packets and their respective status as not received. The device may transmit the control message when the device determines that a criterion is met. For example, if the PDCP PDUs received over the first radio link are transmitted in the FIFO manner and the PDCP PDUs received over the second radio link are transmitted in the LIFO manner, as illustrated in Figure 5, then when the gap between the PDCP SNs of two most recently received PDCP PDUs over the first and second radio links, respectively, is less than a specific threshold, it is appropriate for the device to send the control message to enable the peer device to cancel any unnecessary duplicated transmissions that are still pending. For another example, if the PDCP PDUs are transmitted using the dual buffers over both the first and the second radio links, as illustrated in Figure 6, then when the gap between the PDCP SNs of two most recently received PDCP PDUs over the first and second radio links, respectively, is more than a specific threshold, it is appropriate for the device to send the control message to enable the peer device to cancel any unnecessary duplicated transmissions that are still pending. The device may transmit the control message when the device receives an explicit request from the peer device, e.g., a Poll bit in the PDCP header of a PDCP PDU received from the peer device being set to 1. Then, operations 1200 may end.

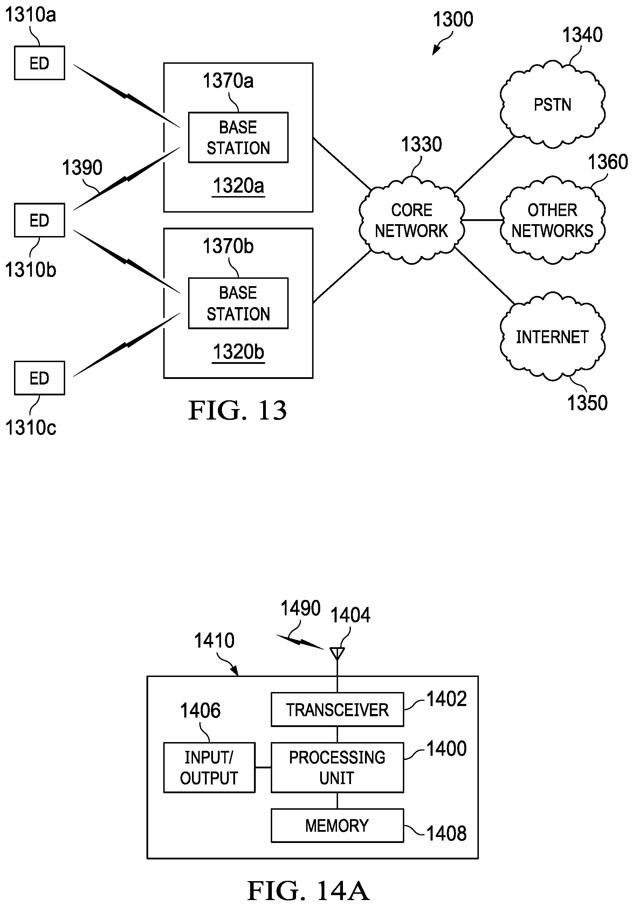

Figure 13 illustrates an example communication system 1300. In general, the system 1300 enables multiple wireless or wired users to transmit and receive data and other content. The system 1300 may implement one or more channel access methods, such as code division multiple access (CDMA), time division multiple access (TDMA), frequency division multiple access (FDMA), orthogonal FDMA (OFDMA), single-carrier FDMA (SC-FDMA), or non-orthogonal multiple access (NOMA).

In this example, the communication system 1300 includes electronic devices (ED) 1310a-1310c, radio access networks (RANs) 1320a-1320b, a core network 1330, a public switched telephone network (PSTN) 1340, the Internet 1350, and other networks 1360. While certain numbers of these components or elements are shown in Figure 13, any number of these components or elements may be included in the system 1300.

The EDs 1310a-1310c are configured to operate or communicate in the system 1300. For example, the EDs 1310a-1310c are configured to transmit or receive via wireless or wired communication channels. Each ED 1310a-1310c represents any suitable end user device and may include such devices (or may be referred to) as a user equipment or device (UE), wireless transmit or receive unit (WTRU), mobile station, fixed or mobile subscriber unit, cellular telephone, personal digital assistant (PDA), smartphone, laptop, computer, touchpad, wireless sensor, or consumer electronics device.

The RANs 1320a-1320b here include base stations 1370a-1370b, respectively. Each base station 1370a-1370b is configured to wirelessly interface with one or more of the EDs 1310a-1310c to enable access to the core network 1330, the PSTN 1340, the Internet 1350, or the other networks 1360. For example, the base stations 1370a-1370b may include (or be) one or more of several well-known devices, such as a base transceiver station (BTS), a Node-B (NodeB), an evolved NodeB (eNB), a Next Generation (NG) NodeB (gNB), a gNB centralized unit (gNB-CU), a gNB distributed unit (gNB-DU), a Home NodeB, a Home eNodeB, a site controller, an access point (AP), or a wireless router. The EDs 1310a-1310c are configured to interface and communicate with the Internet 1350 and may access the core network 1330, the PSTN 1340, or the other networks 1360.

In the embodiment shown in Figure 13, the base station 1370a forms part of the RAN 1320a, which may include other base stations, elements, or devices. Also, the base station 1370b forms part of the RAN 1320b, which may include other base stations, elements, or devices. Each base station 1370a-1370b operates to transmit or receive wireless signals within a particular geographic region or area, sometimes referred to as a"cell." In some embodiments, multiple-input multiple-output (MIMO) technology may be employed having multiple transceivers for each cell.

The base stations 1370a-1370b communicate with one or more of the EDs 1310a-1310c over one or more air interfaces 1390 using wireless communication links. The air interfaces 1390 may utilize any suitable radio access technology.

It is contemplated that the system 1300 may use multiple channel access functionality, including such schemes as described above. In particular embodiments, the base stations and EDs implement 5G New Radio (NR), LTE, LTE-A, or LTE-B. Of course, other multiple access schemes and wireless protocols may be utilized.

The RANs 1320a-1320b are in communication with the core network 1330 to provide the EDs 1310a-1310c with voice, data, application, Voice over Internet Protocol (VoIP), or other services. Understandably, the RANs 1320a-1320b or the core network 1330 may be in direct or indirect communication with one or more other RANs (not shown). The core network 1330 may also serve as a gateway access for other networks (such as the PSTN 1340, the Internet 1350, and the other networks 1360). In addition, some or all of the EDs 1310a-1310c may include functionality for communicating with different wireless networks over different wireless links using different wireless technologies or protocols. Instead of wireless communication (or in addition thereto), the EDs may communicate via wired communication channels to a service provider or switch (not shown), and to the Internet 1350.

Although Figure 13 illustrates one example of a communication system, various changes may be made to Figure 13. For example, the communication system 1300 could include any number of EDs, base stations, networks, or other components in any suitable configuration.

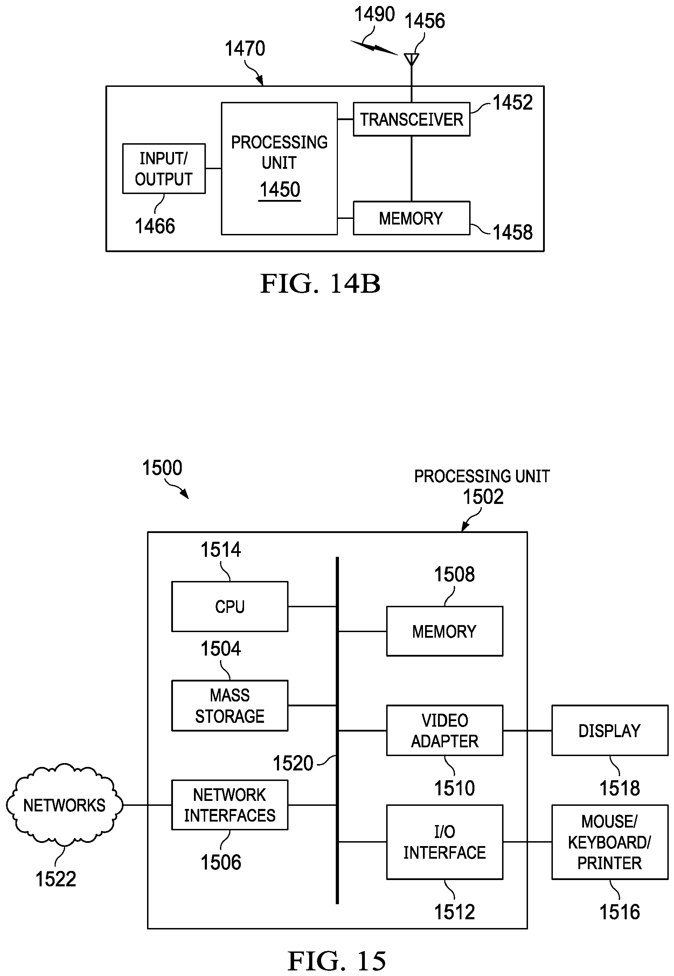

Figures 14A and 14B illustrate example devices that may implement the methods and teachings according to this disclosure. In particular, Figure 14A illustrates an example ED 1410, and

Figure 14B illustrates an example base station 1470. These components could be used in the system 1300 or in any other suitable system.

As shown in Figure 14A, the ED 1410 includes at least one processing unit 1400. The processing unit 1400 implements various processing operations of the ED 1410. For example, the processing unit 1400 could perform signal coding, data processing, power control, input/output processing, or any other functionality enabling the ED 1410 to operate in the system 1300. The processing unit 1400 also supports the methods and teachings described in more detail above. Each processing unit 1400 includes any suitable processing or computing device configured to perform one or more operations. Each processing unit 1400 could, for example, include a microprocessor, microcontroller, digital signal processor, field programmable gate array, or application specific integrated circuit.

The ED 1410 also includes at least one transceiver 1402. The transceiver 1402 is configured to modulate data or other content for transmission by at least one antenna or NIC (Network Interface Controller) 1404. The transceiver 1402 is also configured to demodulate data or other content received by the at least one antenna 1404. Each transceiver 1402 includes any suitable structure for generating signals for wireless or wired transmission or processing signals received wirelessly or by wire. Each antenna 1404 includes any suitable structure for transmitting or receiving wireless or wired signals. One or multiple transceivers 1402 could be used in the ED 1410, and one or multiple antennas 1404 could be used in the ED 1410. Although shown as a single functional unit, a transceiver 1402 could also be implemented using at least one transmitter and at least one separate receiver.

The ED 1410 further includes one or more input/output devices 1406 or interfaces (such as a wired interface to the Internet 1350). The input/output devices 1406 facilitate interaction with a user or other devices (network communications) in the network. Each input/output device 1406 includes any suitable structure for providing information to or receiving information from a user, such as a speaker, microphone, keypad, keyboard, display, or touch screen, including network interface communications.

In addition, the ED 1410 includes at least one memory 1408. The memory 1408 stores instructions and data used, generated, or collected by the ED 1410. For example, the memory 1408 could store software or firmware instructions executed by the processing unit(s) 1400 and data used to reduce or eliminate interference in incoming signals. Each memory 1408 includes any suitable volatile or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in Figure 14B, the base station 1470 includes at least one processing unit 1450, at least one transceiver 1452, which includes functionality for a transmitter and a receiver, one or more antennas 1456, at least one memory 1458, and one or more input/output devices or interfaces 1466. A scheduler, which would be understood by one skilled in the art, is coupled to the processing unit 1450. The scheduler could be included within or operated separately from the base station 1470. The processing unit 1450 implements various processing operations of the base station 1470, such as signal coding, data processing, power control, input/output processing, or any other functionality. The processing unit 1450 can also support the methods and teachings described in more detail above. Each processing unit 1450 includes any suitable processing or computing device configured to perform one or more operations. Each processing unit 1450 could, for example, include a microprocessor, microcontroller, digital signal processor, field programmable gate array, or application specific integrated circuit.

Each transceiver 1452 includes any suitable structure for generating signals for wireless or wired transmission to one or more EDs or other devices. Each transceiver 1452 further includes any suitable structure for processing signals received wirelessly or by wire from one or more EDs or other devices. Although shown combined as a transceiver 1452, a transmitter and a receiver could be separate components. Each antenna 1456 includes any suitable structure for transmitting or receiving wireless or wired signals. While a common antenna 1456 is shown here as being coupled to the transceiver 1452, one or more antennas 1456 could be coupled to the transceiver(s) 1452, allowing separate antennas 1456 to be coupled to the transmitter and the receiver if equipped as separate components. Each memory 1458 includes any suitable volatile or non-volatile storage and retrieval device(s). Each input/output device 1466 facilitates interaction with a user or other devices (network communications) in the network. Each input/output device 1466 includes any suitable structure for providing information to or receiving/providing information from a user, including network interface communications.

Figure 15 is a block diagram of a computing system 1500 that may be used for implementing the devices and methods disclosed herein. For example, the computing system can be any entity of UE, access network (AN), mobility management (MM), session management (SM), user plane gateway (UPGW), or access stratum (AS). Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1500 includes a processing unit 1502. The processing unit includes a central processing unit (CPU) 1514, memory 1508, and may further include a mass storage device 1504, a video adapter 1510, and an I/O interface 1512 connected to a bus 1520.

The bus 1520 may be one or more of any type of several bus architectures including a memory bus or memory controller, a peripheral bus, or a video bus. The CPU 1514 may comprise any type of electronic data processor. The memory 1508 may comprise any type of non-transitory system memory such as static random access memory (SRAM), dynamic random access memory (DRAM), synchronous DRAM (SDRAM), read-only memory (ROM), or a combination thereof. In an embodiment, the memory 1508 may include ROM for use at boot-up, and DRAM for program and data storage for use while executing programs.

The mass storage 1504 may comprise any type of non-transitory storage device configured to store data, programs, and other information and to make the data, programs, and other information accessible via the bus 1520. The mass storage 1504 may comprise, for example, one or more of a solid state drive, hard disk drive, a magnetic disk drive, or an optical disk drive.

The video adapter 1510 and the I/O interface 1512 provide interfaces to couple external input and output devices to the processing unit 1502. As illustrated, examples of input and output devices include a display 1518 coupled to the video adapter 1510 and a mouse, keyboard, or printer 1516 coupled to the I/O interface 1512. Other devices may be coupled to the processing unit 1502, and additional or fewer interface cards may be utilized. For example, a serial interface such as Universal Serial Bus (USB) (not shown) may be used to provide an interface for an external device.

The processing unit 1502 also includes one or more network interfaces 1506, which may comprise wired links, such as an Ethernet cable, or wireless links to access nodes or different networks. The network interfaces 1506 allow the processing unit 1502 to communicate with remote units via the networks. For example, the network interfaces 1506 may provide wireless communication via one or more transmitters/transmit antennas and one or more receivers/receive antennas. In an embodiment, the processing unit 1502 is coupled to a local-area network 1522 or a wide-area network for data processing and communications with remote devices, such as other processing units, the Internet, or remote storage facilities.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a storing unit or module, a discarding unit or module, a partitioning unit or module, an identifying unit or module, a detecting unit or module, or a conveying unit or module. The respective units or modules may be hardware, software, or a combination thereof. For instance, one or more of the units or modules may be an integrated circuit, such as field programmable gate arrays (FPGAs) or application-specific integrated circuits (ASICs).

Although the present disclosure and its advantages have been described in detail, it should be understood that various changes, substitutions and alterations can be made herein without departing from the scope of the disclosure as defined by the appended claims.

**Claims**

1. A method implemented by a device (1406), the method comprising:

submitting, by the device (1406), a stream of packets to lower layers associated with a first communication link between the device (1406) and a peer device for transmissions in a first order over the first communication link; submitting, by the device (1406), the stream of packets to lower layers associated with a second communication link between the device (1406) and the peer device for transmissions in a second order over the second communication link, the second order being different from the first order, and the second communication link being different from the first communication link; and

determining, by the device (1406), receipt of an indication indicating one or more packets of the stream of packets being successfully transmitted over the second communication link while submitting the stream of packets for the transmissions over the first and second communication links, and based thereon, causing the one or more packets to be discarded from a first transmission buffer associated with the first communication link; **characterized in that** the method

further comprises:

determining, by the device (1406), a first set of packets from the stream of packets as prioritized packets for the first communication link and unprioritized packets for the second communication link; and determining, by the device (1406), a second set of packets from the stream of packets as unprioritized packets for the first communication link and prioritized packets for the second communication link, the second set of packets being different from the first set of packets.

2. The method of claim 1, submitting the stream of packets for the transmissions in the first order over the first communication link comprising submitting, by the device (1406), a first packet from the first set of packets to the lower layers associated with the first communication link before submitting a first packet from the second set of packets to the lower layers associated with the first communication link; submitting the stream of packets for the transmissions in the second order over the second communication link comprising submitting, by the device (1406), a second packet from the second set of packets to the lower layers associated with the second communication link before submitting a second packet from the first set of packets to the lower layers associated with the second communication link; and the lower layers comprising the physical, PHY, layer and the media access control, MAC, sublayer.

3. The method of claim 2, submitting the first packet from the first set of packets to the lower layers associated with the first communication link before submitting the first packet from the second set of packets to the lower layers associated with the first communication link being in response to determining that a sequence number associated with the first packet from the first set of packets is no greater than a sum of a pre-specified number and a sequence number associated with the first packet from the second set of packets.

4. The method of claim 2 or 3, submitting the stream of packets for the transmissions in the first order over the first communication link further comprising submitting, by the device (1406), a third packet from the second set of packets to the lower layers associated with the first communication link before submitting the first packet from the first set of packets to the lower layers associated with the first communication link in response to determining that the sequence number associated with the first packet from the first set of packets is greater than a sum of the pre-specified number and a sequence number associated with the third packet from the second set of packets.

5. The method of any one of claims 2 to 4, submitting the stream of packets for the transmissions in the first order over the first communication link further comprising submitting, by the device (1406), a fourth packet from the second set of packets to the lower layers associated with the first communication link before submitting the first packet from the first set of packets to the lower layers associated with the first communication link in response to determining that a packet duplicated with the fourth packet from the second set of packets has been transmitted unsuccessfully over the second communication link.

6. The method of any one of claims 1 to 5, each packet in the stream of packets comprising a Packet Data Convergence Protocol, PDCP, protocol data unit, PDU.

7. The method of claim 6, the first transmission buffer and a second transmission buffer being in a PDCP entity (113) of the device (1406), the second transmission buffer being associated with the second communication link, and the lower layers further including the radio link control, RLC, sublayer.

8. The method of claim 6, the first transmission buffer being in a first radio link control, RLC, entity associated with the first communication link and a second transmission buffer being in a second RLC entity associated with the second communication link, both the first and second RLC entities being associated with a PDCP entity (113) of the device (1406).

9. The method of claim 8, further comprising:

   conveying, by the device (1406), the stream of packets to the first RLC entity, each packet of the first set of packets being conveyed along with a first priority value and each packet of the second set of packets being conveyed along with a second priority value, the first priority value indicating that an associated packet is a prioritized packet, and the second priority value indicating that an associated packet is an unprioritized packet; and
   conveying, by the device (1406), the stream of packets to the second RLC entity, each packet of the first set of packets being conveyed along with the second priority value and each packet of the second set of packets being conveyed along with the first priority value.

10. The method of claim 8 or 9, the device (1406) comprising a next generation Node B centralized unit, gNB-CU, the first RLC entity being in a gNB distributed unit, gNB-DU, each
    packet of the stream of packets along with the associated priority value being conveyed to the first RLC entity using a General packet radio service, GPRS, Tunnelling Protocol, GTP, encapsulated user Plane Data Unit, G-PDU, message sent from the gNB-CU to the gNB-DU over an F1 connection between the gNB-CU and the gNB-DU.

11. An apparatus, configured to perform the method according to any one of the claims 1 to 10.

12. A computer program product comprising an instruction, wherein when the instruction is executed by one or more processors, cause the one or more processors to perform the method according to any one of claims 1 to 10.

**Patentansprüche**

1. Verfahren, das durch eine Einrichtung (1406) umgesetzt wird, wobei das Verfahren Folgendes umfasst:

   Übermitteln eines Stroms von Paketen durch die Einrichtung (1406) an untere Schichten, die einem ersten Kommunikationslink zwischen der Einrichtung (1406) und einer Peer-Einrichtung zugeordnet sind, für Übertragungen in einer ersten Reihenfolge über den ersten Kommunikationslink;
   Übermitteln des Stroms von Paketen durch die Einrichtung (1406) an untere Schichten, die einem zweiten Kommunikationslink zwischen der Einrichtung (1406) und der Peer-Einrichtung zugeordnet sind, für Übertragungen in einer zweiten Reihenfolge über den zweiten Kommunikationslink, wobei sich die zweite Reihenfolge von der ersten Reihenfolge unterscheidet und der zweite Kommunikationslink sich von dem ersten Kommunikationslink unterscheidet; und
   Bestimmen, durch die Einrichtung (1406), eines Empfangs einer Angabe, die angibt, dass ein oder mehrere Pakete des Stroms von Paketen erfolgreich über den zweiten Kommunikationslink übertragen wurden, während der Strom von Paketen für die Übertragungen über den ersten und den zweiten Kommunikationslink übermittelt wird, und basierend darauf Veranlassen, dass das eine oder die mehreren Pakete aus einem ersten Übertragungspuffer, der dem ersten Kommunikationslink zugeordnet ist, verworfen werden; **dadurch gekennzeichnet, dass** das Verfahren ferner Folgendes umfasst:

   Bestimmen eines ersten Satzes von Paketen aus dem Strom von Paketen durch die Einrichtung (1406) als priorisierte Pakete für den ersten Kommunikationslink und als nicht priorisierte Pakete für den zweiten Kommunikationslink; und
   Bestimmen eines zweiten Satzes von Paketen aus dem Strom von Paketen durch die Einrichtung (1406) als nicht priorisierte Pakete für den ersten Kommunikationslink und als priorisierte Pakete für den zweiten Kommunikationslink, wobei sich der zweite Satz von Paketen von dem ersten Satz von Paketen unterscheidet.

2. Verfahren nach Anspruch 1, wobei das Übermitteln des Stroms von Paketen für die Übertragungen in der ersten Reihenfolge über den ersten Kommunikationslink Übermitteln eines ersten Pakets aus dem ersten Satz von Paketen durch die Einrichtung (1406) an die dem ersten Kommunikationslink zugeordneten unteren Schichten vor einem Übermitteln eines ersten Pakets aus dem zweiten Satz von Paketen an die dem ersten Kommunikationslink zugeordneten unteren Schichten umfasst; das Übermitteln des Stroms von Paketen für die Übertragungen in der zweiten Reihenfolge über den zweiten Kommunikationslink Übermitteln eines zweiten Pakets aus dem zweiten Satz von Paketen durch die Einrichtung (1406) an die dem zweiten Kommunikationslink zugeordneten unteren Schichten vor einem Übermitteln eines zweiten Pakets aus dem ersten Satz von Paketen an die dem zweiten Kommunikationslink zugeordneten unteren Schichten umfasst; und wobei die unteren Schichten die physikalische Schicht, PHY- Schicht, und die Unterschicht für die Medienzugriffssteuerung, MAC-Unterschicht, umfassen.

3. Verfahren nach Anspruch 2, wobei das Übermitteln des ersten Pakets aus dem ersten Satz von Paketen an die unteren Schichten, die dem ersten Kommunikationslink zugeordnet sind, vor dem Übermitteln des ersten Pakets aus dem zweiten Satz von Paketen an die unteren Schichten, die dem ersten Kommunikationslink zugeordnet sind, als Reaktion auf ein Bestimmen erfolgt, dass eine dem ersten Paket aus dem ersten Satz von Paketen zugeordnete Sequenznummer nicht größer ist als eine Summe einer vorab spezifizierten Nummer und einer dem ersten Paket aus dem zweiten Satz von Paketen zugeordneten Sequenznummer.

4. Verfahren nach Anspruch 2 oder 3, wobei das Übermitteln des Stroms von Paketen für die Übertragungen in der ersten Reihenfolge über den ersten Kommunikationslink ferner Übermitteln, durch die Einrichtung (1406), eines dritten Pakets aus dem zweiten Satz von Paketen an die unteren Schichten, die dem ersten Kommunikationslink zugeordnet sind, vor einem Übermitteln des ersten Pakets aus dem ersten Satz von Paketen an die unteren Schichten, die dem ersten Kommunikationslink zugeordnet sind, als Reaktion auf ein Bestimmen, dass die dem ersten Paket aus dem ersten Satz von Paketen zugeordnete Sequenznummer größer als eine Summe der vorab spezifizierten Nummer und einer dem dritten Paket aus dem zweiten Satz von Paketen zugeordneten Sequenznummer ist, umfasst.

5. Verfahren nach einem der Ansprüche 2 bis 4, wobei das Übermitteln des Stroms von Paketen für die Übertragungen in der ersten Reihenfolge über den ersten Kommunikationslink ferner Übermitteln, durch die Einrichtung (1406), eines vierten Pakets aus dem zweiten Satz von Paketen an die unteren Schichten, die dem ersten Kommunikationslink zugeordnet sind, vor einem Übermitteln des ersten Pakets aus dem ersten Satz von Paketen an die unteren Schichten, die dem ersten Kommunikationslink zugeordnet sind, als Reaktion ein Bestimmen, dass ein mit dem vierten Paket aus dem zweiten Satz von Paketen dupliziertes Paket nicht erfolgreich über den zweiten Kommunikationslink übertragen wurde, umfasst.

6. Verfahren nach einem der Ansprüche 1 bis 5, wobei jedes Paket in dem Strom von Paketen eine Protokolldateneinheit, PDU, für Packet Data Convergence Protocol, PDCP, umfasst.

7. Verfahren nach Anspruch 6, wobei sich der erste Übertragungspuffer und ein zweiter Übertragungspuffer in einer PDCP-Entität (113) der Einrichtung (1406) befinden, der zweite Übertragungspuffer dem zweiten Kommunikationslink zugeordnet ist und die unteren Schichten ferner die Funkverbindungssteuerungs(RLC)-Unterschicht beinhalten.

8. Verfahren nach Anspruch 6, wobei sich der erste Übertragungspuffer in einer ersten Funkverbindungssteuerungs(RLC)-Entität befindet, die dem ersten Kommunikationslink zugeordnet ist, und sich ein zweiter Übertragungspuffer in einer zweiten RLC-Entität befindet, die dem zweiten Kommunikationslink zugeordnet ist, wobei sowohl die erste als auch die zweite RLC-Entität einer PDCP-Entität (113) der Einrichtung (1406) zugeordnet sind.

9. Verfahren nach Anspruch 8, ferner umfassend:

Befördern des Stroms von Paketen durch die Einrichtung (1406) an die erste RLC-Entität, wobei jedes Paket des ersten Satzes von Paketen zusammen mit einem ersten Prioritätswert befördert wird und jedes Paket des zweiten Satzes von Paketen zusammen mit einem zweiten Prioritätswert befördert wird, wobei der erste Prioritätswert angibt, dass ein zugeordnetes Paket ein priorisiertes Paket ist, und der zweite Prioritätswert angibt, dass ein zugeordnetes Paket ein nicht priorisiertes Paket ist; und
Befördern des Stroms von Paketen durch die Einrichtung (1406) an die zweite RLC-Entität, wobei jedes Paket des ersten Satzes von Paketen zusammen mit dem zweiten Prioritätswert befördert wird und jedes Paket des zweiten Satzes von Paketen zusammen mit dem ersten Prioritätswert befördert wird.

10. Verfahren nach Anspruch 8 oder 9, wobei die Einrichtung (1406) eine Next Generation Node B Centralized Unit, gNB-CU, umfasst, wobei sich die erste RLC-Entität in einer gNB Distributed Unit, gNB-DU, befindet, jedes Paket des Stroms von Paketen zusammen mit dem zugeordneten Prioritätswert an die erste RLC-Entität unter Verwendung einer im General Packet Radio Service (GPRS) Tunnelling Protocol (GTP) gekapselten Plane-Data-Unit(G-PDU)-Benutzernachricht von der gNB-CU an die gNB-DU über eine F1-Verbindung zwischen der gNB-CU und der gNB-DU befördert wird.

11. Vorrichtung, die dazu konfiguriert ist, das Verfahren nach einem der Ansprüche 1 bis 10 durchzuführen.

12. Computerprogrammprodukt, eine Anweisung umfassend, wobei, wenn die Anweisung durch einen oder mehrere Prozessoren ausgeführt wird, den einen oder die mehreren Prozessoren dazu veranlassen, das Verfahren nach einem der Ansprüche 1 bis 10 durchzuführen.

**Revendications**

1. Procédé mis en œuvre par un dispositif (1406), le procédé comprenant :

la soumission, par le dispositif (1406), d'un flux de paquets à des couches inférieures associées à une première liaison de communication entre le dispositif (1406) et un dispositif homologue pour des transmissions dans un premier ordre sur la première liaison de communication ;
la soumission, par le dispositif (1406), du flux de paquets aux couches inférieures associées à une seconde liaison de communication entre le dispositif (1406) et le dispositif homologue pour des transmissions dans un second ordre sur la seconde liaison de communication, le second ordre étant différent du premier ordre, et la seconde liaison de communication étant différente de la première liaison de communication ; et
la détermination, par le dispositif (1406), de la réception d'une indication indiquant qu'un ou plusieurs paquets du flux de paquets ont été transmis avec succès sur la seconde liaison de communication, tout en soumettant le flux de paquets aux transmissions sur les première et seconde liaisons de communication, et, sur cette base, la provocation de l'élimination des ou plusieurs paquets d'un premier tampon de transmission associé à la première liaison de communication ;
**caractérisé en ce que** le procédé comprend également :

la détermination, par le dispositif (1406), d'un premier ensemble de paquets du flux de paquets en tant que paquets prioritaires pour la première liaison de communication et paquets non prioritaires pour la seconde liaison de communication ; et
la détermination, par le dispositif (1406), d'un second ensemble de paquets du flux de paquets en tant que paquets non prioritaires pour la première liaison de communication et des paquets prioritaires pour la seconde liaison de communication,
le second ensemble de paquets étant différent du premier ensemble de paquets.

2. Procédé selon la revendication 1, la soumission du flux de paquets pour les transmissions du premier ordre sur la première liaison de communication comprenant la soumission, par le dispositif (1406), d'un premier paquet du premier ensemble de paquets aux couches inférieures associées à la première liaison de communication avant la soumission d'un premier paquet du second ensemble de paquets aux couches inférieures associées à la première liaison de communication ; la soumission du flux de paquets pour les transmissions du second ordre sur la seconde liaison de communication comprenant la soumission, par le dispositif (1406), d'un deuxième paquet du second ensemble de paquets aux couches inférieures associées à la seconde liaison de communication avant la soumission d'un deuxième paquet du premier ensemble de paquets aux couches inférieures associées à la seconde liaison de communication ; et les couches inférieures comprenant la couche physique, PHY, et la sous-couche de commande d'accès au support, MAC.

3. Procédé selon la revendication 2, la soumission du premier paquet du premier ensemble de paquets aux couches inférieures associées à la première liaison de communication avant la soumission du premier paquet du second ensemble de paquets aux couches inférieures associées à la première liaison de communication étant en réponse à la détermination qu'un numéro de séquence associé au premier paquet du premier ensemble de paquets n'est pas supérieur à une somme d'un nombre prédéfini et d'un numéro de séquence associé au premier paquet du second ensemble de paquets.

4. Procédé selon la revendication 2 ou 3, la soumission du flux de paquets pour les transmissions du premier ordre sur la première liaison de communication comprenant également la soumission, par le dispositif (1406), d'un troisième paquet du second ensemble de paquets aux couches inférieures associées à la première liaison de communication avant la soumission du premier paquet du premier ensemble de paquets aux couches inférieures associées à la première liaison de communication en réponse à la détermination que le numéro de séquence associé au premier paquet du premier ensemble de paquets est supérieur à une somme du nombre prédéfini et d'un numéro de séquence associé au troisième paquet du second ensemble de paquets.

5. Procédé selon l'une quelconque des revendications 2 à 4, la soumission du flux de paquets pour les transmissions du premier ordre sur la première liaison de communication, comprenant également la soumission, par le dispositif (1406), d'un quatrième paquet du second ensemble de paquets aux couches inférieures associées à la première liaison de communication avant la soumission du premier paquet du premier ensemble de paquets aux couches inférieures associées à la première liaison de communication en réponse à la détermination qu'un paquet dupliqué avec le quatrième paquet du second ensemble de paquets a été transmis sans succès sur la seconde liaison de communication.

6. Procédé selon l'une quelconque des revendications 1 à 5, chaque paquet dans le flux de paquets comprenant une unité de données de protocole, PDU, de protocole de convergence de données par paquets, PDCP.

7. Procédé selon la revendication 6, le premier tampon de transmission et un second tampon de transmission étant dans une entité PDCP (113) du dispositif (1406), le second tampon de transmission étant associé à la seconde liaison de communication, et les couches inférieures comportant également la sous-couche de commande de liaison radio, RLC.

8. Procédé selon la revendication 6, le premier tampon de transmission étant dans une première entité de commande de liaison radio, RLC, associée à la première liaison de communication et un second tampon de transmission étant dans une seconde entité RLC associée à la seconde liaison de communication, les première et seconde entités RLC étant associées à une entité PDCP (113) du dispositif (1406).

9. Procédé selon la revendication 8, comprenant également :

l'acheminement, par le dispositif (1406), du flux de paquets vers la première entité RLC, chaque paquet du premier ensemble de paquets étant acheminé avec une première valeur de priorité et chaque paquet du second ensemble de paquets étant acheminé avec une seconde valeur de priorité, la première valeur de priorité indiquant qu'un paquet associé est un paquet prioritaire, et la seconde valeur de priorité indiquant qu'un paquet associé est un paquet non prioritaire ; et
l'acheminement, par le dispositif (1406), du flux de paquets vers la seconde entité RLC, chaque paquet du premier ensemble de paquets étant acheminé avec la seconde valeur de priorité et chaque paquet du second ensemble de paquets étant acheminé avec la première valeur de priorité.

10. Procédé selon la revendication 8 ou 9, le dispositif (1406) comprenant une unité centralisée de nœud B de nouvelle génération, gNB-CU, la première entité RLC étant dans une unité distribuée gNB, gNB-DU, chaque paquet du flux de paquets avec la valeur de priorité associée étant transmis à la première entité RLC à l'aide d'un message de protocole de tunnellisation, GTP, de service radio par paquets général, GPRS, d'unité de données de plan utilisateur encapsulée, G-PDU, envoyé du gNB-CU au gNB-DU sur une connexion F1 entre le gNB-CU et le gNB-DU.

11. Appareil configuré pour réaliser le procédé selon l'une quelconque des revendications 1 à 10.

12. Produit de programme informatique comprenant une instruction, dans lequel lorsque l'instruction est exécutée par un ou plusieurs processeurs, elle amène les un ou plusieurs processeurs à réaliser le procédé selon l'une quelconque des revendications 1 à 10.

FIG. 1

FIG. 2A

HIGHER
LAYER

UE/NG-RAN

TRANSMITTING
PDCP ENTITY
255

NG-RAN/UE

RECEIVING
PDCP ENTITY
257

PDCP

TRANSMISSION BUFFER:
SEQUENCE NUMBERING

HEADER COMPRESSION

PACKETS
ASSOCIATED TO
A PDCP SDU

INTEGRITY
PROTECTION

PACKETS NOT
ASSOCIATED
TO A PDCP SDU

CIPHERING

ADD PDCP HEADER

263 ROUTING/DUPLICATION

259 RE-SEQUENCE    RE-SEQUENCE 261

TO LINK
1 RLC

TO LINK 2
RLC

HEADER DECOMPRESSION

PACKETS
ASSOCIATED
TO A PDCP SDU

RECEPTION BUFFER:
REORDERING
DUPLICATE
DISCARDING

PACKETS NOT
ASSOCIATED
TO A PDCP SDU

INTEGRITY
VERIFICATION

DECIPHERING

REMOVE PDCP HEADER

RLC/
MAC/ PHY

RADIO INTERFACE (Uu)

FIG. 2B

250

EP 4 144 010 B1

**FIG. 3A**

**FIG. 3B**

EP 4 144 010 B1

FIG. 4A

FIG. 4B

500

PDCP
515

PDCP PDU → N

N-1

o
o
o

2

PDCP SN → 1

514

RE-SEQ

LINK 1
505

LINK 2
507

RLC
517

525 — HDR N | N          HDR N | 1 — 520

510 — HDR N-1 | N-1      HDR N-1 | 2 — 512

o       o          o       o
o       o          o       o
o       o          o       o

RLC PDU → HDR 2 | 2      HDR 2 | N-1

522 — HDR 1 | ✓ 1        HDR 1 | ✓ N — 527

RLC
MAC/PHY

## FIG. 5

FIG. 6

FIG. 7A

710 711 712

714 RLC HDR/ 715   716 RLC HDR/ 717   718 RLC HDR/ 719
BFFR BLOCK 1       BFFR BLOCK 2       BFFR BLOCK 3

| PRIORITIZED | UNPRIORITIZED | PRIORITIZED | UNPRIORITIZED | PRIORITIZED | UNPRIORITIZED |
|---|---|---|---|---|---|
| 3N-2 | 3N | 3N-1 | 3N | 3N | 3N-1 |
| 3N-5 | 3N-1 | 3N-4 | 3N-2 | 3N-3 | 3N-2 |
| o o o | o o o 734 | o o o | o o o 735 | o o o | o o o 733 |
| 4 | 3 732 | 5 | 3 730 | 6 | 2 731 |
| 1 | 2 | 2 | 1 | 3 | 1 |

PRIORITIZED FIRST    PRIORITIZED FIRST    PRIORITIZED FIRST

o o o   o o o        o o o   o o o        o o o   o o o

RLC PDU

| HDR 2 | 4 |   | HDR 2 | 5 |   | HDR 2 | 6 |
| HDR 1 ✓ | 1 | 720   | HDR 1 ✓ | 2 | 722   | HDR 1 ✓ | 3 | 724 |

RLC
─────────────────
MAC/PHY

705        707        709
LINK 1     LINK 2     LINK 3

**FIG. 7B**

EP 4 144 010 B1

800

| | | | | | | |
|---|---|---|---|---|---|---|
| D/C | PDU TYPE | R | R | R | R | OCT 1 |
| FMC | | | | | | OCT 2 |
| FMC (CONT.) | | | | | | OCT 3 |
| FMC (CONT.) | | | | | | OCT 4 |
| FMC (CONT.) | | | | | | OCT 5 |
| BITMAP$_1$ (OPTIONAL) | | | | | | OCT 6 |

805

810

o
o
o

| | |
|---|---|
| BITMAP$_N$ (OPTIONAL) | OCT 5+N |

## FIG. 8

1200

| |
|---|
| 1210 — RECEIVE FIRST STREAM OF PACKETS OVER FIRST LINK AND SECOND STREAM OF PACKETS OVER SECOND LINK |

↓

| |
|---|
| 1220 — DETECT FOR DUPLICATED PACKET BETWEEN THE FIRST AND SECOND STREAMS OF PACKETS |

↓

| |
|---|
| 1230 — FORM THIRD STREAM OF PACKETS AS UNION OF THE FIRST AND SECOND STREAMS OF PACKETS |

↓

| |
|---|
| 1240 — TRANSMIT MESSAGE INCLUDING INFORMATION OF THE THIRD STREAM OF PACKETS RECEIVED |

↓

END

## FIG. 12

900

910 — STORE A STREAM OF PACKETS IN EACH OF FIRST AND SECOND BUFFERS

920 — SUBMIT PACKETS STORED IN THE FIRST BUFFER FOR TRANSMISSION IN A FIRST ORDER OVER THE FIRST LINK AND SUBMIT PACKETS STORED IN THE SECOND BUFFER FOR TRANSMISSION IN A SECOND ORDER OVER THE SECOND LINK

930 — RECEIVED INDICATION OF A PACKET OF THE STREAM OF PACKETS BEING RECEIVED?

YES

DISCARD THE PACKET FROM THE FIRST AND SECOND BUFFERS

940

NO

950 — ARE THE FIRST AND SECOND BUFFERS EMPTY?

NO

YES

END

FIG. 9

1000

1010 — GENERATE A STREAM OF PACKETS

1020 — DETERMINE A PRIORITY VALUE FOR EACH PACKET OF THE STREAM OF PACKETS FOR EACH RLC ENTITY OF A PLURALITY OF RLC ENTITIES

1030 — CONVEY THE EACH PACKET TO THE EACH RLC ENTITY, RESPECTIVELY, ALONG WITH THE PRIORITY VALUE OF THE EACH PACKET DETERMINED FOR THE EACH RLC ENTITY

1040 — RECEIVED INDICATION OF A PACKET OF THE STREAM OF PACKETS BEING RECEIVED?  — NO

YES

1050 — INDICATE TO THE PLURALITY OF RLC ENTITIES TO DISCARD THE PACKET

1060 — HAVE ALL PACKETS OF THE STREAM OF PACKETS BEEN RECEIVED? — NO

YES

END

FIG. 10

1100

1110 — OBTAIN STREAM OF PACKETS ALONG WITH PRIORITY VALUES ASSOCIATED WITH THE STREAM OF PACKETS

1120 — STORE EACH PACKET OF THE STREAM OF PACKETS IN PRIORITIZED BUFFER OR UNPRIORITIZED BUFFER IN ACCORDANCE WITH THE PRIORITY VALUE ASSOCIATED WITH THE EACH PACKET

RECEIVED INDICATION OF PACKET OF THE STREAM OF PACKETS BEING RECEIVED? — NO

1130

YES

1140 — DISCARD THE PACKET FROM AN ASSOCIATED BUFFER

IS TRANSMISSION OPPORTUNITY PRESENT? — NO

1150

YES

IS THE PRIORITIZED BUFFER EMPTY? — NO

1160

YES

TRANSMIT NEXT PACKET IN THE PRIORITIZED BUFFER

1170

ARE BOTH BUFFERS EMPTY? — NO

1180

YES

TRANSMIT NEXT PACKET IN THE UNPRIORITIZED BUFFER

1190

END

FIG. 11

1310a

1300

1340

ED

1370a

PSTN

1390

BASE
STATION

1330

1360

1320a

ED

CORE
NETWORK

OTHER
NETWORKS

1310b

1370b

BASE
STATION

1320b

INTERNET

ED

1350

1310c

**FIG. 13**

1490  1404

1410

1406

1410

TRANSCEIVER 1402

INPUT/
OUTPUT

PROCESSING
UNIT

1400

MEMORY 1408

**FIG. 14A**

FIG. 14B

FIG. 15

**EP 4 144 010 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63027711
- US 2018310202 A1
- CN 109428694 A